# EUROPÄISCHE PATENTSCHRIFT

(11) **EP 3 976 550 B1**
(45) Veröffentlichungstag und Bekanntmachung des Hinweises auf die Patenterteilung: **27.12.2023**
(21) Anmeldenummer: 20728053.8
(22) Anmeldetag: 28.05.2020
(51) Int. Cl.: C04B 26/16, C04B 28/08, C04B 111/00, C04B 111/70, C04B 111/94, C04B 111/60, C04B 111/23, C04B 111/20

(54) **VERWENDUNG EINER AUSGEHÄRTETEN BINDEMITTELZUSAMMENSETZUNG ZUM LEITEN VON ELEKTRISCHEM STROM**
USE OF A CURED BINDER COMPOSITION FOR CONDUCTING ELECTRICAL CURRENT
UTILISATION D'UNE COMPOSITION DE LIANT DURCIE POUR CONDUIRE UN COURANT ÉLECTRIQUE

(30) Priorität: 28.05.2019 EP 19177000
(43) Veröffentlichungstag der Anmeldung: 06.04.2022
(60) Teilanmeldung: 23210032.1
(73) Patentinhaber: Sika Technology AG, 6340 Baar (CH)
(72) Erfinder: KELCH, Steffen, 8102 Oberengstringen (CH); MAMIE, Tim, 8004 Zürich (CH); XU-RABL, Rui, 8049 Zürich (CH)
(74) Vertreter: Sika Patent Attorneys
(86) Internationale Anmeldenummer: PCT/EP2020/064824
(87) Internationale Veröffentlichungsnummer: WO 2020/239902

(56) Entgegenhaltungen:
- WO-A1-2013/120719
- JP-A- H0 930 854
- KR-A- 20110 119 899
- KR-B1- 101 705 893

## Beschreibung

### Technisches Gebiet

Die Erfindung betrifft die Verwendung einer ausgehärteten Bindemittelzusammensetzung zum Leiten von elektrischem Strom, wobei die ausgehärtete Bindemittelzusammensetzung erhalten ist durch Aushärten einer aushärtbaren Bindemittelzusammensetzung umfassend: a) mindestens ein organisches Bindemittel und b) einen Füllstoff.

### Stand der Technik

Polymerbeton ist ein wasserundurchlässiger Werkstoff, der typischerweise ein organisches Bindemittel und Füllstoffe enthält. Im Gegensatz zu üblichem Beton, bei dem der Zement als Bindemittel nach dem Aushärten mit Wasser die Füllstoffe zusammenhält, ist es bei Polymerbeton ein organisches Polymer, das als Bindemittel wirkt. Polymerbeton enthält typischerweise keinen Zement als Bindemittel. Der Füllstoff in Polymerbeton besteht typischerweise aus natürlichem Gestein, wie beispielsweise Granit, Quarz, Basalt, Kalkstein, Blähton, Perlit oder anderen mineralischen Rohstoffen, in unterschiedlichen Korngrössen. Füllstoffe werden eingesetzt, um die mechanischen, elektrischen und/oder Verarbeitungseigenschaften von Materialien zu ändern, und gleichzeitig den Anteil der typischerweise teureren Matrix im fertigen Produkt deutlich zu verringern. Darüber hinaus sorgt die Anwesenheit der Füllstoffkörner dafür, den Volumenschrumpf des Polymerbetons nach der Aushärtung von reaktiv vernetzenden Polymermatrices signifikant zu vermindern und dessen Druckfestigkeit zu gewährleisten.

Das aushärtbare flüssige organische Bindemittel, typischerweise bestehend aus mindestens zwei Komponenten, wird üblicherweise nach dem Vermischen der Bindemittelkomponenten mit dem Füllstoff vermischt, in Form gebracht und aushärten gelassen.

Bekannt als organische Bindemittel sind z.B. Epoxidharz-basierte Systeme, Polyurethan-basierte Systeme, ungesättigten Polyesterharze oder Acrylharze.

In Epoxidharz-basiertem Polymerbeton besteht das aushärtbare Bindemittel aus einem aushärtbaren Epoxidharz und einem Härter für das Epoxidharz, die nach dem Vermischen zu einem ausgehärteten Epoxidharz reagieren. In Polyurethan-basiertem Polymerbeton besteht das aushärtbare Bindemittel aus einem Polyisocyanat und einem Polyol, die nach dem Vermischen zu einem chemisch vernetzten Polyurethan reagieren.

Epoxidharz- und Polyurethan-basierte Polymerbetone zeichnen sich durch hohe Festigkeit, Frostbeständigkeit, Abriebkonsistenz und Materialbeständigkeit sowie eine geschlossene und wasserdichte Oberfläche aus. Bekannte Epoxidharz- und Polyurethan-basierte Polymerbetone weisen aber nur eine beschränkte Beständigkeit unter korrosiven Bedingungen auf.

Der steigende Bedarf an Baustoffen sowie Umweltschutzauflagen führen zur Verknappung von natürlichen, mineralischen Rohstoffen, die als Füllstoffe eingesetzt werden können. Das gilt insbesondere für Quarzsand und Quarzkies. Es gibt daher Bestrebungen, die natürlichen Rohstoffe vermehrt durch industrielle Abfallstoffe zu ersetzen.

GB 2460707 beschreibt die Verwendung von Recyclingmaterial als Aggregat für Polymerbeton. Als Teilersatz für die natürlichen Gesteine werden Glassand, Kunststoff-Perlen, zerkleinertes Porzellan oder rezyklierter Polymerbeton verwendet.

Ein industrieller Abfallstoff, der weltweit in grosser Menge anfällt, ist Schlacke. Sie fällt beispielsweise bei der Gewinnung von Metallen, beim Metallrecycling oder bei der Verbrennung von Haushaltsmüll oder Klärschlamm an. Hüttensand, eine glasige Schlacke aus der Eisengewinnung, wird aufgrund seiner latent hydraulischen Eigenschaft in feingemahlener Form als Zusatz zu Zement und als Zementersatzmaterial eingesetzt. Andere Schlacken, wie beispielsweise Stahlschlacke, die bei der Stahlerzeugung oder dem Stahlrecycling entsteht, oder Kupferschlacke, die bei der Kupfergewinnung anfällt, sind wegen ihrer geringen hydraulischen Eigenschaften als Zementersatz weniger geeignet. Sie werden, wie auch Hochofenschlacke, teilweise als Schotter im Strassenbau, als preisgünstiges Hinterfüllmaterial oder, wie beispielsweise Kupferschlacke, als Strahlmittel eingesetzt.

WO 2010 030048 beschreibt die Verwendung von "zerstäubter Stahlschlacke" als Bestandteil von Polymerbeton basierend auf einem ungesättigten Polyesterharz. Diese "zerstäubte Stahlschlacke" wird durch ein spezielles Verfahren hergestellt, welches zusätzliche Kosten verursacht und die Schlacke verteuert. Zerstäubte Stahlschlacke ist sowohl mengenmässig als auch örtlich nur begrenzt verfügbar.

WO 2013 120719 beschreibt die Verwendung einer ausgehärteten Bindemittelzusammensetzung enthaltend Carbonfasern als antistatischer Bodenbelag.

Herkömmliche Füllstoffe, wie z.B. Quarzsand, lassen sich in bekannten Polymerbetonen aber nicht ohne weiteres durch industrielle Abfallstoffe ersetzen. Je nach Beschaffenheit der industriellen Abfallstoffe können bei einem teilweisen oder vollständigen Ersatz die physikalischen und chemischen Eigenschaften der Polymerbetone in unerwünschter Weise verändert werden. Es besteht daher weiterhin Bedarf nach neuen Ansätzen und verbesserten Lösungen im Bereich der Polymerbetone, welche die vorstehend genannten Nachteile möglichst nicht aufweisen.

### Darstellung der Erfindung

Aufgabe der vorliegenden Erfindung ist es, verbesserte Polymerbetone und Polymer-basierte Vergussmörtel zur Verwendung zum Leiten von elektrischem Strom zur Verfügung zu stellen. Insbesondere sollen die Polymerbetone und Vergussmörtel möglichst vorteilhafte mechanische und chemische Eigenschaften aufweisen. Die Polymerbetone oder Vergussmörtel sollen gegenüber korrosiven Bedingungen möglichst beständig sein. Erwünscht ist zudem, dass die Polymerbetone oder Vergussmörtel sowohl unter Verwendung von herkömmlichen Füllstoffen wie auch industriellen Abfallstoffen, welche möglichst weltweit verfügbar sind und keine aufwendige Aufbereitung benötigen, hergestellt werden können.

Bindemittelzusammensetzungen, die auf Polyisocyanat und Polyol basieren, haben gegenüber anderen organischen Bindemittelzusammensetzungen, die auch für Polymerbeton eingesetzt werden, insbesondere gegenüber ungesättigten Polyesterharzen oder Acrylharzen, den Vorteil, dass sie auch bei tiefen Temperaturen wie beispielsweise 5°C oder 10°C gut verarbeitbar und aushärtbar sind, sowie eine gute Giessfähigkeit und eine gute Verlaufsfähigkeit aufweisen. Auch werden, im Gegensatz zu den oft hochviskosen ungesättigten Polyesterharzen, keine explosionsgefährlichen Initiatoren, wie etwa Peroxide, zur Härtung benötigt. Ausserdem ist die Oberfläche der ausgehärteten Bindemittelzusammensetzung auf Basis von Polyurethan fest und nicht klebrig, dies im Gegensatz zu den ungesättigten Polyesterharzen, bei denen die Oberfläche oft nur langsam oder unvollständig aushärtet.

Im Vergleich zu Epoxy-basierten Zusammensetzungen, welche die gleiche Gewichtskonzentration von Füllstoffen aufweisen, verfügen die erfindungsgemäss verwendeten Polyurethan-basierten Zusammensetzungen bzw. die daraus erhältlichen Polymerbetone oder Vergussmörtel aufgrund der gegebenen Flexibilität der Polyurethanmatrix nach dem Aushärten (7d bei Raumtemperatur) typischerweise über eine leicht geringere/reduzierte Druckund Biegefestigkeit. Die erfindungsgemäss verwendeten Polyurethan-basierten Zusammensetzungen verfügen aber gegenüber dem Epoxy-basierten Referenzmaterial über eine deutlich weniger ausgeprägte Quellbarkeit in Wasser und eine signifikant höhere chemische und mechanische Beständigkeit gegenüber dem Einwirken von korrosiven Medien, insbesondere gegenüber verdünnten organischen Säuren, wie z.B. wässriger Essigsäure.

Konkret hat sich gezeigt, dass die Druckfestigkeiten der Polyurethan-basierten Polymerbetone und Vergussmörtel auch bei dauerhaftem Kontakt sowohl mit sauren wässrigen Lösungen (pH < 7) als auch mit neutralen wässrigen Lösungen (pH = 7) und basischen wässrigen Lösungen (pH > 7) über Wochen im Wesentlichen stabil bleiben oder sogar nachhärten.

Dies im Gegensatz zu versuchsweise hergestellten Epoxidharz-basierten Zusammensetzungen, welche bei Kontakt mit basischen wässrigen Lösungen zwar ebenfalls etwas nachhärten, bei Kontakt mit sauren oder neutralen wässrigen Lösungen in Bezug auf die Druckfestigkeit mit der Zeit aber einen starken Abfall zeigen.

Die Polyurethan-basierten Zusammensetzungen weisen somit unabhängig vom pH-Wert der korrosiven Medien eine hohe Korrosionsbeständigkeit auf. Dies ist von grossem Vorteil, weil Polymerbetone oder Vergussmörtel typischerweise sowohl in Kontakt mit alkalischen als auch sauren Lösungen kommen. Dies ist z.B. der Fall, wenn Polyurethan-basierte Polymerbetone oder Vergussmörtel in Kombination mit zementösen Materialien eingesetzt werden, aus welchen alkalische Substanzen ausgewaschen werden können, und die Polymerbetone oder Vergussmörtel von Zeit zu Zeit mit säurehaltigen Reinigungsmitteln in Kontakt kommen.

Die genannten Vorteile der Polyurethan-basierten Zusammensetzungen lassen sich dabei sowohl mit herkömmlichen Füllstoffen, z.B. Quarz, als auch mit industriellen Abfallstoffen, insbesondere kostengünstig und weltweit erhältlichen Schlacken, realisieren. Schlacken sind aber besonders vorteilhaft in Bezug auf die chemische Beständigkeit und Druckfestigkeit, so dass bei Bedarf gänzlich auf Quarz verzichtet werden kann.

Überraschenderweise kann Schlacke als Füllstoff in hohen Mengenanteilen und ohne Qualitätsverlust in den Polyurethan-basierten Zusammensetzungen eingesetzt werden.

Schlacke ist ein Abfallstoff aus der Metallgewinnung, dem Metallrecycling oder der Müllverbrennung und fällt weltweit in sehr grosser Menge an. Ihre Verwendung in den erfindungsgemäss verwendeten Polyurethan-basierten Zusammensetzungen trägt zur Reduktion von Deponien bei und reduziert den Bedarf an qualitativ hochstehender natürlicher Gesteinskörnung, deren Verfügbarkeit immer mehr abnimmt.

Polymerbetone und Vergussmörtel auf Basis von Polyurethanen, die Schlacke enthalten, zeigen gute Eigenschaften, wie insbesondere hohe Festigkeiten und gute Verarbeitbarkeiten, auch wenn die Polymerbetone und Vergussmörtel gänzlich frei von üblichen Füllstoffen wie insbesondere Quarzsand oder Quarzmehl sind. Überraschenderweise werden die Materialeigenschaften, insbesondere die Druckfestigkeit, im Vergleich zum Stand der Technik, zum Teil sogar noch verbessert.

Besonders überraschend ist dabei der Umstand, dass die erfindungsgemäss verwendeten Polymerbetone und Vergussmörtel, insbesondere wenn sie Stahlschlacke oder Kupferschlacke enthalten, eine verbesserte elektrische Leitfähigkeit aufweisen. Zudem kann teilweise die thermische Leitfähigkeit beeinflusst, insbesondere reduziert, werden.

Besonders bevorzugte Ausführungsformen der Erfindung sind Gegenstand der abhängigen Ansprüche.

### Wege zur Ausführung der Erfindung

Gegenstand der Erfindung ist eine wie in Anspruch 1 definiert.

Unter "Rohdichte" wird im vorliegenden Dokument die Dichte eines Festkörpers verstanden. Die Rohdichte ergibt sich aus dem Quotienten von Gewicht des Festkörpers und dessen Volumen, einschliesslich des eingeschlossenen Porenvolumens.

Aushärtbare organische Bindemittelzusammensetzungen, die nach dem Härten ein Polyurethan darstellen, enthalten reaktiv vernetzbare Polyisocyanate mit mehr als einer Isocyanatgruppe pro Molekül, die mit Polyolen unter Ausbildung kovalenter Bindungen zu einem Feststoff reagieren.

Die erfindungsgemäss verwendete aushärtbare Bindemittelzusammensetzung ist aushärtbar, da die Isocyanatgruppen noch nicht oder erst teilweise abreagiert sind.

Unter einem "Füllstoff" wird ein partikulärer Stoff verstanden. Dieser liegt im Rahmen der vorliegenden Erfindung in Form von Schlacke oder einer Mischung aus Schlacke und Quarz vor. Quarz und Schlacke sind in verschiedenen Formen und Grössen kommerziell erhältlich. Die Formen können von feinen Sandpartikeln bis zu grossen groben Steinen variieren.

Der Füllstoff liegt in Form von Schlacke oder einer Mischung aus Schlacke und Quarz vor. Ganz speziell bevorzugt liegt der Füllstoff in Form von Schlacke vor.

Bevorzugt weist der Füllstoff, insbesondere Schlacke, eine Korngrösse bzw. Partikelgrösse von 0.1 µm - 32 mm, insbesondere 0.05 - 10 mm, auf. Besonders bevorzugt weist der Füllstoff eine Partikelgrösse von wenigstens 0.1 mm auf, im Speziellen von 0.1 - 3.5 mm, ganz besonders bevorzugt mehr als 0.1 mm bis 3.5 mm. Die Korngrösse bzw. Partikelgrösse kann durch ein Siebverfahren gemäss DIN EN 933-1 bestimmt werden.

Weiter bevorzugt liegen im Füllstoff wenigstens zwei, insbesondere wenigstens drei, Kornfraktionen mit unterschiedlichen Partikelgrössen vor. Die wenigstens zwei oder drei unterschiedlichen Kornfraktionen können dabei aus dem gleichen Material oder aus unterschiedlichen Materialien bestehen.

Besonders bevorzugt beinhaltet der Füllstoff, insbesondere Schlacke, wenigstens drei verschiedene Kornfraktionen. Insbesondere verfügt eine erste Kornfraktion über eine Partikelgrösse im Bereich von 0.125 - 0.25 mm, eine zweite Kornfraktion über eine Partikelgrösse im Bereich von 0.5 - 0.8 mm und eine dritte Kornfraktion über eine Partikelgrösse im Bereich von 2.0 - 3.15 mm.

Insbesondere weist der Füllstoff, insbesondere Schlacke, einen Anteil von mindestens 60 Gew-%, bevorzugt mindestens 65 Gew.-%, auf, bezogen auf 100 Gew.-% Bindemittelzusammensetzung.

Vorteilhaft enthält die Bindemittelzusammensetzung 50 bis 80 Gew.-%, insbesondere 60 bis 75 Gew.-%, im Speziellen 65 bis 70 Gew.-%, des Füllstoffs, bezogen auf 100 Gew.-% Bindemittelzusammensetzung. Besonders bevorzugt handelt es sich beim Füllstoff dabei um Schlacke.

Es kann aber auch vorteilhaft sein, speziell für hohe Festigkeiten und/oder gute elektrische Leitfähigkeit, wenn die Bindemittelzusammensetzung 83 bis 90 Gew.-%, bevorzugt 85 bis 88 Gew.-%, des Füllstoffs, bezogen auf 100 Gew.-% Bindemittelzusammensetzung, enthält. Hierbei handelt es beim Füllstoff ebenfalls bevorzugt um Schlacke.

Die Bindemittelzusammensetzung enthält zusätzlich zu den mindestens 50 Gew.-% des Füllstoffs, insbesondere Schlacke, bevorzugt noch mindestens ein zusätzliches Füllstoffmaterial.

Das zusätzliche Füllstoffmaterial unterscheidet sich vom Füllstoff, insbesondere chemisch und/oder bezüglich der Partikelgrösse. Chemisch verschieden meint, dass der Füllstoff eine andere Summenformel aufweist als das Füllstoffmaterial.

Ein Anteil des zusätzlichen Füllstoffmaterials beträgt vorzugsweise 10 bis 40 Gew.-%, insbesondere 15 bis 35 Gew.-%, im Speziellen 20 bis 30 Gew.-%, wobei die Angaben bezogen sind auf 100 Gew.-% der Bindemittelzusammensetzung.

Die Partikelgrösse des zusätzlichen Füllstoffmaterials richtet sich nach der jeweiligen Anwendung und kann bis zu 32 mm oder mehr betragen. Bevorzugt liegt die Partikelgrösse bei maximal 16 mm, speziell bevorzugt bei maximal 8 mm. Die Partikelgrösse liegt besonders bevorzugt unter 4 mm. Vorteilhaft ist eine Partikelgrösse im Bereich von etwa 0.1 µm bis 3.5 mm. Die Korngrösse bzw. Partikelgrösse kann durch ein Siebverfahren gemäss DIN EN 933-1 bestimmt werden.

Im Besonderen weist das zusätzliche Füllstoffmaterial eine Partikelgrösse von maximal 0.1 mm, bevorzugt im Bereich von 0.1 µm bis maximal 1 mm, auf.

Vorteilhaft werden Füllstoffmaterialien von unterschiedlicher Partikelgrösse entsprechend der gewünschten Sieblinie gemischt.

Gemäss einer vorteilhaften Ausführungsform enthält die Bindemittelzusammensetzung Füllstoff in Form von Schlacke und/oder Quarz, mit einer Partikelgrösse von mehr als 0.1 mm und zusätzliches Füllstoffmaterial mit einer Partikelgrösse von maximal 0.1 mm und kein weiteres Füllstoffmaterial. In diesem Fall ist das zusätzliche Füllstoffmaterial bevorzugt ausgewählt aus Sand, Kies, zerkleinerten Steinen, kalzinierte Kiesel, Tonmineralien, Bimsstein, Perlit, Kalkstein, Kalksteinmehl, Quarzmehl, Silicastaub, Kreide, Titandioxid, Schwerspat und/oder Aluminiumoxid. Dabei können auch Mischungen aus zwei oder mehreren der genannten Vertreter vorliegen.

Insbesondere ist das zusätzliche Füllstoffmaterial ausgewählt aus der Gruppe bestehend aus Kies, zerkleinerten Steinen, kalzinierte Kiesel, Tonmineralien, Bimsstein, Perlit, Kalkstein, Kalksteinmehl, Kreide, Titandioxid, Schwerspat und/oder Aluminiumoxid. Dabei können auch Mischungen aus zwei oder mehreren der genannten Vertreter vorliegen. Besonders bevorzugt sind Kalkstein und/oder Schwerspat.

Vorteilhaft enthält die Bindemittelzusammensetzung 50 bis 80 Gew.-%, insbesondere 60 bis 75 Gew.-%, im Speziellen 65 bis 70 Gew.-%, Schlacke oder Schlacke und Quarz, sowie 10 bis 40 Gew.-%, insbesondere 15 bis 35 Gew.-%, im Speziellen 20 bis 30 Gew.-% des zusätzlichen Füllstoffmaterials, wobei die Angaben bezogen sind auf 100 Gew.-% der Bindemittelzusammensetzung. Das zusätzliche Füllstoffmaterial beinhaltet insbesondere Kalkstein und/oder Schwerspat.

Ganz besonders bevorzugt enthält die Bindemittelzusammensetzung 50 bis 80 Gew.-%, insbesondere 60 bis 75 Gew.-%, im Speziellen 65 bis 70 Gew.-%, Schlacke, sowie 10 bis 40 Gew.-%, insbesondere 15 bis 35 Gew.-%, im Speziellen 20 bis 30 Gew.-%, des zusätzlichen Füllstoffmaterials, insbesondere Kalkstein und/oder Schwerspat, wobei die Angaben bezogen sind auf 100 Gew.-% der Bindemittelzusammensetzung.

Bevorzugt enthält die Bindemittelzusammensetzung Füllstoff in Form von Schlacke oder Schlacke und Quarz, mit einer Partikelgrösse von mehr als 0.1 mm und zusätzliches Füllstoffmaterial, das keine Schlacke oder Schlacke und Quarz ist, mit einer Partikelgrösse von maximal 0.1 mm und kein weiteres Füllstoffmaterial. Solche Zusammensetzungen lassen sich gut verarbeiten und geben gute Festigkeit nach dem Aushärten. Die Korngrösse bzw. Partikelgrösse kann durch ein Siebverfahren gemäss DIN EN 933-1 bestimmt werden.

Noch weiter bevorzugt enthält die Bindemittelzusammensetzung Schlacke mit einer Partikelgrösse von mehr als 0.1 mm und zusätzliches Füllstoffmaterial, das keine Schlacke ist, mit einer Partikelgrösse von maximal 0.1 mm und keine weiteren Füllstoffmaterialien. Solche Zusammensetzungen lassen sich gut verarbeiten und geben gute Festigkeit nach dem Aushärten.

Ein Gewichtsanteil des zusätzlichen Füllmaterials am Gesamtgewicht der Bindemittelzusammensetzung ist bevorzugt kleiner als ein Gewichtsanteil des Füllstoffs.

Bevorzugt ist ein Masseverhältnis des Füllstoffs, insbesondere Schlacke, zum zusätzlichen Füllstoffmaterial, insbesondere mit einer Partikelgrösse von maximal 0.1 mm, von 100:0 bis 60:40, insbesondere von 80:20 bis 70:30. Ein solches Verhältnis bewirkt eine gute Packung der mineralischen Füllstoffe und eine gute Festigkeit der ausgehärteten Bindemittelzusammensetzung. Vorteilhaft weist der Füllstoff, insbesondere die Schlacke, in diesem Fall eine Partikelgrösse von mehr als 0.1 mm auf.

Es kann aber auch vorteilhaft sein, wenn die Bindemittelzusammensetzung kein zusätzliches Füllstoffmaterial enthält. Die Schlacke oder die Schlacke und der Quarz umfassen in diesem Fall alle mineralischen Partikel mit einer Grösse von etwa 0.1 µm bis zu 1 mm, 2 mm, 4 mm, 8 mm, oder mehr.

Besonders bevorzugt ist es, wenn die Bindemittelzusammensetzung als Füllstoff ausschliesslich Schlacke und kein zusätzliches Füllstoffmaterial enthält. In diesem Fall liegt auch kein Quarz vor. Die Schlacke umfasst in diesem Fall alle mineralischen Partikel mit einer Grösse von etwa 0.1 µm bis zu 1 mm, 2 mm, 4 mm, 8 mm, oder mehr. Dies ist insbesondere vorteilhaft für eine maximale Verwertung der Schlacke und eine gute Festigkeit der ausgehärteten Bindemittelzusammensetzung, sowie, insbesondere bei eisenhaltigen Schlacken, eine verbesserte elektrische Leitfähigkeit. Zudem kann teilweise auch die thermische Leitfähigkeit beeinflusst werden.

Schlacke entsteht als Nebenprodukt bei der Gewinnung von Metallen in der Erzverhüttung, dem Metallrecycling oder bei der Abfallverbrennung. Es handelt sich um ein Stoffgemisch, das sich hauptsächlich aus den Oxiden und Silikaten verschiedener Metalle zusammensetzt. Die chemische Zusammensetzung von Schlacken wird typischerweise in Form der Oxide angegeben, unabhängig davon, in welchen Verbindungen die Elemente effektiv vorliegen. So wird beispielsweise der Gehalt an Si als SiO₂, der Gehalt an Al als Al₂O₃ und der Gehalt an Fe als FeO angegeben. So entspricht beispielsweise eine analytisch bestimmte Menge von 10 g Eisen (Fe) einer Menge von 12.9 g FeO. Der bei einer Zusammensetzung von Schlacken angegebene Prozentsatz für Bestandteile bezieht sich hierbei auf den Prozentsatz des Bestandteils als sein Oxid, bezogen auf die Summe aller Bestandteile in der Zusammensetzung, deren Gewicht ebenfalls in Form ihrer Oxide gerechnet wird. Die Hauptinhaltsstoffe von Schlacken sind CaO, SiO₂, Al₂O₃, MgO und FeO. Der Anteil dieser Stoffe in den verschiedenen Schlacketypen kann stark unterschiedlich sein. Die Zusammensetzung der Schlacke kann mit Röntgenfluoreszenzanalyse gemäss DIN EN ISO 12677 bestimmt werden.

Schlacke, insbesondere Schlacke aus der Metallgewinnung oder dem Metallrecycling, wird typischerweise in flüssigem Zustand von der Metallschmelze abgetrennt und, typischerweise in Schlackenbeeten, zur Abkühlung gelagert. Die Abkühlung kann, etwa durch Aufsprühen von Wasser, beschleunigt werden. Der Abkühlungsprozess kann die physikalischen Eigenschaften, insbesondere die Kristallinität und die Korngrösse der Schlacke, beeinflussen.

Hochofenschlacke (HOS) ist Schlacke, die bei der Gewinnung von Roheisen im Hochofen anfällt. Während des Reduktionsprozesses im Hochofen entsteht die Schlacke aus den Begleitmaterialien des Eisenerzes und den zugesetzten Schlackenbildnern wie Kalkstein oder Dolomit. Die Schlacke wird von dem Roheisen getrennt und entweder in Schlackenbeeten langsam abgekühlt, wobei die mehrheitlich kristalline Hochofenstückschlacke entsteht, oder mit Wasser und/oder Luft schnell abgekühlt, wobei der glasige Hüttensand (HS) entsteht. Hochofenschlacken weisen typischerweise einen Gehalt an Eisen, gerechnet als FeO, von unter 3 Gew.-%, bezogen auf die Gesamtzusammensetzung der Schlacke, und eine Rohdichte von 2.1 bis 2.8 kg/l, auf. Stahlschlacke fällt bei der Stahlproduktion aus Roheisen oder dem Stahlrecycling als Nebenprodukt an. Für die Stahlerzeugung werden mehrere Verfahren und Schritte eingesetzt, bei denen Stahlschlacke anfällt. Beispiele für Stahlschlacke sind BOS, Basic Oxygen Slag, welche als Nebenprodukt bei der Stahlerzeugung nach dem Sauerstoff-Blasverfahren anfällt, LD-Schlacke, welche bei dem Linz-Donawitz-Verfahren anfällt, oder EOS, ElektroofenSchlacke, auch EAFS für Electric Arc Furnace Slag, die bei der Stahlerzeugung oder dem Stahlrecycling mittels eines Elektrolichtbogenofens anfällt. Weitere Beispiele für Stahlschlacke sind Schlacken, die bei weiteren Stahlreinigungsprozessen anfallen, wie beispielsweise Schlacke aus dem Pfannenofen (Pfannenschlacke oder Ladle Slag). Stahlschlacken weisen typischerweise einen Gehalt an Eisen von etwa 5 bis 45 Gew.-%, gerechnet als FeO, bezogen auf die Gesamtzusammensetzung der Schlacke, und eine Rohdichte von 3.0-3.7 kg/l, auf.

Weitere Prozesse, bei denen Schlacken anfallen, sind beispielsweise metallurgische Prozesse zur Gewinnung von Nicht-Eisen-Metallen. Diese Schlacken werden als Metallhüttenschlacken bezeichnet und weisen oft einen hohen Gehalt an Eisen auf. Eine solche Metallhüttenschlacke ist Kupferschlacke, die als Nebenprodukt bei der Kupfergewinnung anfällt. Kupferschlacke weist typischerweise einen hohen Gehalt an Eisen, oft von 40 Gew.% oder mehr, gerechnet als FeO, auf. Das Eisen in Kupferschlacken liegt typischerweise zu einem Grossteil in Form von Eisensilikat vor. Kupferschlacken haben typischerweise eine Rohdichte im Bereich von 3.7 kg/l.

Schlacken, die in Abfall- oder Klärschlammverbrennungsanlagen anfallen, haben stark unterschiedliche Zusammensetzung. Oft zeichnen sie sich durch einen hohen Gehalt an Eisen aus.

Bevorzugt ist die Schlacke ausgewählt aus der Gruppe bestehend aus Hochofenschlacken, insbesondere Hochofenstückschlacken und Hüttensande, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind. Hochofenschlacken und Stahlschlacken sind weltweit gut erhältlich und weisen typischerweise chargenbedingt nur geringe Schwankungen in ihrer chemischen und mineralogischen Zusammensetzung und den physikalischen Eigenschaften auf. Metallhüttenschlacken, insbesondere Kupferschlacke, zeichnen sich durch hohe Dichte und hohe Festigkeit aus.

In einer bevorzugten Ausführungsform der Erfindung ist die Schlacke eine eisenhaltige Schlacke mit mindestens 8 Gew.-%, insbesondere mindestens 10 Gew.-%, bevorzugt mindestens 15 Gew.-%, im Speziellen mindestens 20 Gew.-% oder mindestens 25 Gew.-%, Eisen, gerechnet als FeO. Insbesondere enthält die eisenhaltige Schlacke 10 bis 70 Gew.-% Eisen, gerechnet als FeO.

Es wurde überraschend festgestellt, dass Schlacken mit einem hohen Gehalt an Eisen in der ausgehärteten Bindemittelzusammensetzung die elektrische Leitfähigkeit erhöhen und teilweise auch die thermische Leitfähigkeit reduzieren können. Sie sind daher speziell gut geeignet für die Herstellung von Materialien mit verbesserter elektrischer Leitfähigkeit und reduzierter thermischer Leitfähigkeit. Insbesondere enthalten Schlacken in den Bindemittelzusammensetzungen, die nach dem Aushärten eine verbesserte elektrische Leitfähigkeit aufweisen sollen, 10 bis 70 Gew.-%, bevorzugt 15 bis 60 Gew.-%, Eisen, gerechnet als FeO. Bevorzugt ist die eisenhaltige Schlacke eine Stahlschlacke, insbesondere Schlacke aus dem Elektrolichtbogenofen, der Giesspfanne, dem Linz-Donawitz-Verfahren oder dem Sauerstoff-Blasverfahren, oder Kupferschlacke.

In einer weiteren bevorzugten Ausführungsform weist die Schlacke eine Rohdichte von mindestens 2.9 kg/l, bevorzugt mindestens 3.1 kg/l, insbesondere mindestens 3.3 kg/l, im Speziellen mindestens 3.5 kg/l, auf. Es hat sich gezeigt, dass Bindemittelzusammensetzungen, die Schlacken von hoher Rohdichte enthalten, nach dem Aushärten an der Oberseite (obere Oberfläche) eine Schicht von ausgehärtetem Bindemittel aufweisen können, in der der Anteil an Schlacke im Vergleich zur restlichen ausgehärteten Bindemittelzusammensetzung deutlich kleiner ist. Insbesondere ist der Anteil an Schlacke mit einer Partikelgrösse über 0.1 mm in dieser Schicht unter etwa 10 Gew.-%, insbesondere unter 5 Gew.-%. Dies ergibt eine besonders gute Haftung mit einem darüber liegenden Material, was speziell vorteilhaft, beispielsweise für das Verankern von Maschinen und Turbinen durch Untergiessen, ist.

Die bevorzugte Partikelgrösse der Schlacke richtet sich nach der jeweiligen Anwendung und kann bis zu 32 mm oder mehr betragen. Vorteilhaft weist die Schlacke eine Partikelgrösse von maximal 16 mm, bevorzugt maximal 8 mm, mehr bevorzugt maximal 4 mm, im Speziellen maximal 3.5 mm, auf. Die Korngrösse bzw. Partikelgrösse kann durch ein Siebverfahren gemäss DIN EN 933-1 bestimmt werden.

Schlackepartikel von geeigneter Grösse können auch durch Brechen und/oder Mahlen von grösseren Schlackepartikeln erhalten werden.

Die Schlacke kann, beispielsweise durch Sieben, in Korngrössenfraktionen getrennt werden und die einzelnen Korngrössenfraktionen können anschliessend in unterschiedlichen Mengen gemischt werden, um eine gewünschte Korngrössenverteilung, die Sieblinie, zu erhalten. Solche Verfahren sind dem Fachmann bekannt.

Vorteilhaft weist die Schlacke eine Partikelgrösse von 0.05 bis 16 mm, bevorzugt 0.06 bis 8 mm, mehr bevorzugt 0.1 bis 4 mm, im Speziellen 0.12 bis 3.5 mm, auf.

Bevorzugt weisen die Schlackepartikel eine unregelmässige Form und/oder eine raue Oberfläche auf und sind insbesondere nicht kugelförmig. Dies ist vorteilhaft, insbesondere für eine Verzahnung der Partikel untereinander und für einen guten Verbund mit dem Bindemittel.

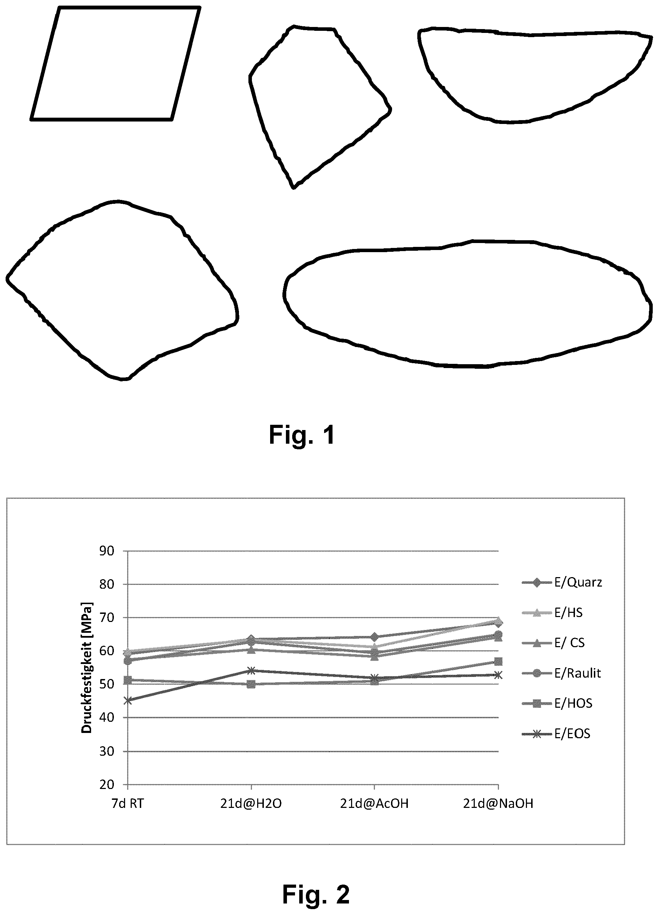

Insbesondere können die Schlackepartikel jede nicht kugelförmige geometrische Form, entweder gleichförmig oder uneinheitlich, aufweisen. Beispielsweise können die Partikel eine konische, polygonale, kubische, fünfeckige, sechseckige, achteckige, prismatische und/oder polyedrische Form aufweisen. Uneinheitliche Partikel können beispielsweise kreisförmige, elliptische, ovale, quadratische, rechteckige, dreieckige oder mehreckige Querschnitte aufweisen, die sich zumindest teilweise darin befinden. Die Ausdrücke "uneinheitlich" oder "irregulär" geformte Partikel beziehen sich auf dreidimensionale Partikelformen wobei mindestens zwei unterschiedliche Querschnitte durch die Partikel eine unterschiedliche Form aufweisen. Beispielhafte Querschnitte durch Schlackepartikel mit unregelmässiger Form sind schematisch in Fig. 1 dargestellt. Eine Übersicht geeigneter Partikelformen bietet S. Blott, K. Pye "Particle shape: a review and new methods of characterization and classification" in Sedimentology (2008) 55, 31-63.

Bevorzugt wird eine Schlacke, insbesondere eine Stahlschlacke, die, insbesondere in Schlackenbeeten, mit Wasser abgekühlt wurde. Ebenso vorteilhaft ist eine Schlacke, insbesondere eine Kupferschlacke, die als Schlackenstrom mit einem Druckwasserstrahl granuliert wurde.

Durch das raschere Abkühlen bricht die Schlacke in kleine Stücke. Das ist vorteilhaft, weil dadurch Energie für das Zerkleinern eingespart werden kann und auch, weil dadurch eine unregelmässige, oft kantige Form entsteht.

Bevorzugt liegt der Feuchtegehalt der Schlacke unter 5 Gew.-%, mehr bevorzugt unter 3 Gew.-%, speziell bevorzugt unter 1 Gew.-%, insbesondere unter 0.5 Gew.-%.

Für gewisse Anwendungen kann es vorteilhaft sein, wenn die Porosität der Schlacke im Bereich von 5 Vol-% liegt. Damit kann das Gewicht des Produktes ohne grosse Beeinträchtigung der Endeigenschaften reduziert werden.

Für gewisse Anwendungen kann es auch vorteilhaft sein, wenn die Porosität der Schlacke über 5 Vol.-% liegt, damit kann das Gewicht des Produktes gesenkt werden. Für gewisse Anwendungen, speziell für hoch druckfeste Materialien, kann es auch vorteilhaft sein, wenn die Porosität der Schlacke unter 5 Vol.-%, bevorzugt unter 3 Vol.-%, liegt.

In einer besonders vorteilhaften Ausführungsform der Erfindung ist die Bindemittelzusammensetzung bevorzugt weitgehend frei von Quarz, insbesondere Quarzsand und Quarzmehl. Insbesondere enthält sie weniger als 10 Gew.-%, bevorzugt weniger als 5 Gew.-%, besonders bevorzugt weniger als 1 Gew.-%, Quarz. Eine solche Zusammensetzung schont die natürlichen Ressourcen und ermöglicht gute bis sehr gute Eigenschaften bei der Verarbeitung, bei der Aushärtung und im Gebrauch.

Das organische Bindemittel in der aushärtbaren Bindemittelzusammensetzung umfasst mindestens ein Polyisocyanat und mindestens ein Polyol.

Unter Polyisocyanat wird eine Verbindung verstanden, die zwei oder mehr Isocyanatgruppen enthält. Der Begriff Polyisocyanat umfasst hierbei auch Isocyanatgruppen-haltige Polymere. Polyisocyanate ergeben durch eine Reaktion mit Luftfeuchtigkeit oder mit Polyolen Polyurethane. Hierbei bezeichnet der Ausdruck "Polyurethan" Polymere, die durch die sogenannte Diisocyanat-Polyaddition gebildet werden. Diese Polymere können zusätzlich zu den Urethangruppen noch andere Gruppen, insbesondere Harnstoffgruppen aufweisen.

Als Polyisocyanat bevorzugt sind aliphatische, cycloaliphatische oder aromatische Diisocyanate, insbesondere 1,6-Hexamethylendiisocyanat (HDI), 1-Isocyanato-3,3,5-trimethyl-5-isocyanatomethylcyclohexan (Isophorondiisocyanat oder IPDI), Perhydro-2,4'- und/oder -4,4'-diphenylmethandiisocyanat (H₁₂MDI), 4,4'-Diphenylmethandiisocyanat, gegebenenfalls mit Anteilen von 2,4'und/oder 2,2'-Diphenylmethandiisocyanat (MDI), 2,4-Toluylendiisocyanat oder Gemische davon mit 2,6-Toluylendiisocyanat (TDI), Gemische aus MDI und MDI-Homologen (polymeres MDI oder PMDI) oder oligomere Isocyanate.

Ein geeignetes Isocyanatgruppen-haltiges Polymer wird insbesondere erhalten aus der Umsetzung von mindestens einem Polyol mit einer überstöchiometrischen Menge von mindestens einem Polyisocyanat, insbesondere Diisocyanat, bevorzugt MDI, TDI, IPDI oder HDI.

Geeignete Polyole sind, insbesondere die folgenden handelsüblichen Polyole oder Mischungen davon:
- Polyetherpolyole, insbesondere Polyoxyalkylendiole und/oder Polyoxyalkylentriole. Bevorzugte Polyetherpolyole sind Polyoxypropylendiole, Polyoxypropylen-triole oder Ethylenoxid-terminierte (EO-endcapped) Polyoxypropylendiole oder -triole.
- Polyesterpolyole, auch Oligoesterole genannt, hergestellt nach bekannten Verfahren, insbesondere der Polykondensation von Hydroxycarbonsäuren bzw. Lactonen oder der Polykondensation von aliphatischen und/oder aromatischen Polycarbonsäuren mit zwei- oder mehrwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole,
- Polyhydroxyfunktionelle Fette und Öle, auch Fettsäurepolyole genannt,
- Polykohlenwasserstoffpolyole, auch Oligohydrocarbonole genannt,
- epoxidierte Pflanzenöle sowie ihre Umsetzungsprodukte mit monofunktionellen Alkoholen,
- Polybutadien-Polyole,
- Umsetzungsprodukte von pflanzlichen Ölen, insbesondere Rizinusöl, mit Ketonharzen,
- Polyester-Polyole, die auf hydriertem Tallöl basieren,
- Polyester-Polyole, die auf Dimerfettsäuren oder Dimerfettalkoholen basieren,
- alkoxylierte Polyamine.

Bevorzugt beinhaltet das organische Bindemittel mindestens eine Mischung von Polyolen mit unterschiedlicher OH-Funktionalität.

Bevorzugt umfasst die Bindemittelzusammensetzung mindestens ein aromatisches Polyisocyanat und mindestens ein Polyol, ausgewählt aus der Gruppe bestehend aus epoxidierten Pflanzenölen sowie deren Umsetzungsprodukten mit monofunktionellen Alkoholen, Polybutadien-Polyolen, Umsetzungsprodukten von pflanzlichen Ölen, insbesondere Rizinusöl, mit Ketonharzen, Polyester-Polyolen, die auf hydriertem Tallöl basieren, und Polyester-Polyolen, die auf Dimerfettsäuren oder Dimerfettalkoholen basieren.

Speziell vorteilhaft sind Kombinationen von Polyisocyanaten und Polyolen wie sie in EP 3 339 343 und EP 3 415 544 beschrieben sind.

Solche Bindemittelzusammensetzungen sind besonders hydrophob, nehmen nach dem Aushärten keine Feuchtigkeit auf und sind hydrolysestabil, was vorteilhaft ist.

Als Katalysatoren sind metallorganische Verbindungen oder Amine, insbesondere sec. und tert. Amine, geeignet.

Bevorzugt ist mindestens ein Netz- und/oder Dispergiermittel, insbesondere auf der Basis eines Polycarboxylatethers, in der Bindemittelzusammensetzung vorhanden. Dies ermöglicht eine bessere Verarbeitbarkeit, insbesondere gute Fliessfähigkeit, und einen hohen Anteil an Füllstoffen, was vorteilhaft für eine gute Homogenität und Festigkeit der ausgehärteten Bindemittelzusammensetzung ist.

Unter Polycarboxylatether wird in diesem Dokument ein Kammpolymer verstanden, bei dem sowohl anionische Gruppen als auch Polyalkylenglycol-Seitenketten kovalent an das Polymerrückgrat gebunden sind. Solche Polymere sind als Verflüssiger für mineralische Bindemittel wie Zement und Gips bekannt.

Bevorzugte Polycarboxylatether umfassen Struktureinheiten der Formel I und Struktureinheiten der Formel II, 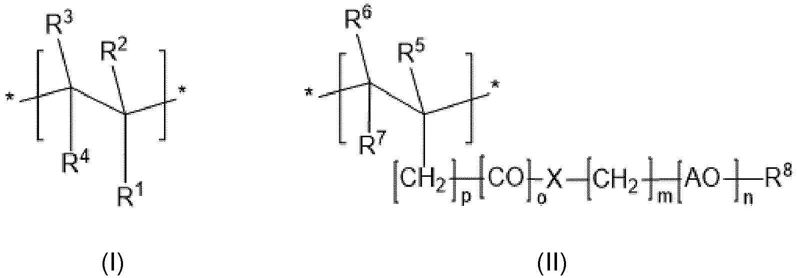 wobei
R¹, jeweils unabhängig voneinander -COOM, -SO₂-OM, -O-PO(OM)₂ und/oder -PO(OM)₂, bevorzugt -COOM, ist,
R² und R⁵, jeweils unabhängig voneinander H, -CH₂-COOM oder eine Alkylgruppe mit 1 bis 5 Kohlenstoffatomen, bevorzugt H oder -CH₃, sind,
R³ und R⁶, jeweils unabhängig voneinander H oder eine Alkylgruppe mit 1 bis 5 Kohlenstoffatomen, bevorzugt H, sind,
R⁴ und R⁷, jeweils unabhängig voneinander H, -COOM oder eine Alkylgruppe mit 1 bis 5 Kohlenstoffatomen, bevorzugt H, sind,
oder R¹ und R⁴ einen Ring zu -CO-O-CO- (Anhydrid) formen,
M, jeweils unabhängig voneinander H⁺, ein Alkalimetallion, ein Erdalkalimetallion, ein di- oder trivalentes Metallion, eine Ammoniumgruppe oder ein organisches Ammonium, bevorzugt ein H⁺ oder ein Alkalimetallion, ist, p = 0, 1 or 2,
o = 0 or 1,
m = 0, oder eine ganze Zahl von 1 bis 4,
n = 2 - 250, insbesondere 10 - 200,
X, jeweils unabhängig voneinander -O- oder -NH- ist,
R⁸, jeweils unabhängig voneinander H, eine C₁- bis C₂₀-Alkylgruppe, - Cyclohexylgruppe oder -Alkylarylgruppe ist, und
A = C₂- bis C₄-Alkylen, bevorzugt Ethylen.
Bevorzugt ist das molare Verhältnis von Struktureinheit I zu Struktureinheit II 0.7 - 10 : 1, mehr bevorzugt 1 - 8 : 1, insbesondere 1.5 - 5 : 1.

Es kann auch vorteilhaft sein, wenn der Polycarboxylatether weiter noch eine Struktureinheit III umfasst. Bevorzugt ist Struktureinheit III abgeleitet von Monomeren ausgewählt aus der Gruppe bestehend aus Alkyl- oder Hydroxyalkylestern der Acrylsäure- oder Methacrylsäure, Vinylacetat, Styrol und N-Vinylpyrrolidon.

Bevorzugt enthält der Polycarboxylatether Carbonsäuregruppen und/oder deren Salze und Polyethylenglykol-Seitenketten.

Bevorzugt ist der Polycarboxylatether aus Struktureinheiten I, die abgeleitet von ethylenisch ungesättigten Carbonsäuren, insbesondere ungesättigten Monocarbonsäuren, oder deren Salzen sind, und Struktureinheiten II, die abgeleitet von ethylenisch ungesättigten Polyalkylenglykolen, insbesondere Polyethylenglykolen, sind, aufgebaut. Insbesondere enthält der Polycarboxylatether ausser Struktureinheiten I und Struktureinheiten II keine weiteren Struktureinheiten.

Bevorzugt ist der Füllstoff, insbesondere Schlacke, und gegebenenfalls auch das zusätzliche Füllstoffmaterial, falls vorhanden, mit dem Netz- und/oder Dispergiermittel beschichtet. Die Beschichtung kann hierbei durch einfaches Aufsprühen, entweder eines flüssigen Netz- und/oder Dispergiermittels oder einer Lösung eines flüssigen oder festen Netz- und/oder Dispergiermittels in einem geeigneten Lösungsmittel, erfolgen.

Bevorzugt weist das Polyisocyanat und das Polyol, bezogen auf 100 Gew.-% Bindemittelzusammensetzung, zusammen einen Anteil von mindestens 5 Gew-%, bevorzugt mindestens 10 Gew.-%, im Besonderen 8 - 22 Gew.-%, im Speziellen 10 - 15 Gew.-%, auf.

Eine vorteilhafte Bindemittelzusammensetzung enthält:
- 3 bis 40 Gew.-% Polyisocyanate,
- 3 bis 40 Gew.-% Polyole,
- 50 bis 94 Gew.-% des Füllstoffs, insbesondere Schlacke, wobei bevorzugt mindestens 20 Gew.-% des Füllstoffs eisenhaltige Schlacke ist,
- optional 10 bis 40 Gew.-%, insbesondere 15 bis 35 Gew.-%, im Speziellen 20 bis 30 Gew.-%, zusätzliches Füllstoffmaterial, insbesondere Kalkstein und/oder Schwerspat, und
- 0 bis 15 Gew.-% weitere Additive,
bezogen auf 100 Gew.-% Bindemittel-Zusammensetzung.

Bevorzugt liegen die erfindungsgemäss verwendeten Bindemittelzusammensetzungen vor ihrer Verwendung als Mehrkomponentensystem vor, insbesondere als System mit zwei oder drei Komponenten. Bevorzugt liegen die Bestandteile, die miteinander in einer Härtungsreaktion reagieren können, in getrennt voneinander gelagerten Behältnissen vor. In dieser Form kann die Bindemittelzusammensetzung über einen Zeitraum von mehreren Monaten bis zu einem Jahr und länger gelagert werden, ohne dass sich ihre Eigenschaften in einem für ihren Gebrauch relevanten Ausmass verändern. Erst bei der Anwendung der Bindemittelzusammensetzung werden die reaktiven Komponenten des organischen Bindemittels miteinander vermischt, worauf die Aushärtung der Bindemittelzusammensetzung beginnt.

Ebenfalls offenbart ist ein Mehrkomponentensystem zur Herstellung einer aushärtbaren Bindemittelzusammensetzung umfassend mindestens eine Polyisocyanat-Komponente, umfassend mindestens ein Polyisocyanat, und mindestens eine Polyol-Komponente, umfassend mindestens ein Polyol, wobei Schlacke und optional weitere Inhaltsstoffe in der Polyisocyanat-Komponente, der Polyol-Komponente und/oder einer weiteren Komponente, einer Feststoff-Komponente, vorhanden sind.

Bevorzugt liegt das Gewichts-Verhältnis der Polyisocyanat-Komponente zur Polyol-Komponente im Bereich von 2:1 bis 1:3, mehr bevorzugt bei 1:1 bis 1:2. Bevorzugt liegt das Gewichts-Verhältnis von Polyisocyanat-Komponente plus Polyol-Komponente zur Feststoff-Komponente bei 1:3 bis 1:12, insbesondere bei 1:4 bis 1:10.

Bevorzugt umfasst das Mehrkomponentensystem eine Feststoff-Komponente, enthaltend den Füllstoff, besonders bevorzugt Schlacke. Bevorzugt umfasst die Feststoff-Komponente mindestens 60 Gew.-%, bevorzugt mindestens 70 Gew.-%, im Speziellen mindestens 80 Gew.-%, oder mindestens 90 Gew.-%, vorteilhaft sogar 100 Gew.-% Schlacke oder Schlacke und Quarz, insbesondere Schlacke.

Bevorzugt enthält die Feststoff-Komponente neben Schlacke oder Schlacke und Quarz das optionale zusätzliche Füllstoffmaterial, das optionale Netz- und/oder Dispergiermittel und gegebenenfalls weitere Additive.

Eine bevorzugte Zusammensetzung der Feststoff-Komponente umfasst:
- 70 bis 90 Gew.-% Schlacke oder Schlacke und Quarz, bevorzugt Schlacke, insbesondere mit einer Partikelgrösse von 0.1 bis 16 mm, bevorzugt 0.11 bis 8 mm, insbesondere 0.12 bis 4 mm,
- 10 bis 30 Gew.-% zusätzliches Füllstoffmaterial, insbesondere mit einer Partikelgrösse von maximal 0.1 mm, insbesondere etwa 0.1 µm bis 0.1 mm,
- 0 bis 2 Gew.-%, insbesondere 0.01 bis 1.5 Gew.-%, Additive, umfassend mindestens ein Netz- oder Dispergiermittel, insbesondere einen Polycarboxylatether, und
- 0 bis 5 Gew.-% eines organischen Lösungsmittels, insbesondere eines Lösungsmittels, in welchem der Polycarboxylatether löslich ist.

Eine weitere bevorzugte Zusammensetzung der Feststoff-Komponente umfasst:
- 93 bis 100 Gew.-%, bevorzugt 95 bis 99.97 Gew.-%, Schlacke und/oder Quarz, bevorzugt Schlacke, insbesondere mit einer Partikelgrösse von etwa 0.1 µm bis 16 mm, bevorzugt etwa 0.1 µm bis 8 mm, insbesondere etwa 0.1 µm bis 4 mm,
- 0 bis 1.5 Gew.-%, bevorzugt 0.01 bis 1 Gew.-%, eines Polycarboxylatethers und
- 0 bis 5 Gew.-%, bevorzugt 0.02 bis 4 Gew.-%, eines organischen Lösungsmittels, in welchem der Polycarboxylatether löslich ist.

Die Korngrösse bzw. Partikelgrösse kann dabei durch ein Siebverfahren gemäss DIN EN 933-1 bestimmt werden.

Ebenfalls offenbart die Verwendung der Bindemittelzusammensetzung oder des Mehrkomponentensystems zum Verkleben, Beschichten oder Abdichten von Substraten, zum Verfüllen von Kanten, Löchern oder Fugen, als Verankerung- oder Injektionsharz, als Untergiessoder Vergussmasse, als Bodenbelag, als Vergussmörtel und/oder zur Herstellung von Formkörpern.

Insbesondere wird die Bindemittelzusammensetzung oder das Mehrkomponentensystem als Vergussmörtel verwendet.

Eine "Vergussmörtel" zeichnet sich insbesondere durch eine relativ hohe Fliessfähigkeit aus. Insbesondere ist der Vergussmörtel selbstnivellierend. Dies bedeutet, dass der Vergussmörtel rasch und entmischungsfrei rein aufgrund der Schwerkraft fliesst und an der Oberseite eine horizontale Oberfläche bildet. Als Mass für die Fliessfähigkeit kann z.B. die t₅₀₀-Zeit gemäss DIN EN 12350-8:2010-12 ("Prüfung von Frischbeton - Teil 8: Selbstverdichtender Beton - Setzfliessversuch") sinngemäss angewendet werden.

Es hat sich gezeigt, dass sich auf Basis der erfindungsgemäss verwendeten Bindemittelzusammensetzung auf Basis eines organischen Bindemittels Vergussmörtel formulieren lassen, welche eine mit Zement-basierten Vergussmörteln vergleichbare Fliessfähigkeit aufweisen. Damit lassen sich die Vergussmörtel beispielsweise als Ersatz für Zementbasierte Vergussmörtel einsetzen.

Besonders bevorzugt weist der Vergussmörtel folgende Eigenschaften auf: (i) die Korngrösse beträgt maximal 4 und/oder (ii) die Druckfestigkeit nach 7 Tagen bei 20°C ist grösser als 40 MPa (gemessen nach ASTM D695-96). Ganz besonders bevorzugt erfüllt der Vergussmörtel die Bestimmungen der Norm EN 1504-6:2006.

Ebenfalls offenbart ist die Verwendung der Bindemittelzusammensetzung oder des Mehrkomponentensystems zur Herstellung von Polymerbetonen und/oder Vergussmörteln, welche gegenüber korrosiven Substanzen, insbesondere sauren und/oder basischen wässrigen Lösungen, eine verbesserte Stabilität aufweisen. Bevorzugt wird die verbesserte Stabilität sowohl gegenüber sauren, neutralen als auch basischen wässrigen Lösungen verbessert.

Unter einer sauren Lösung wird dabei insbesondere eine Lösung mit einem pH < 7, bevorzugt < 4, verstanden. Eine basische Lösung meint im Besonderen eine Lösung mit einem pH > 7, bevorzugt > 10.

Unter einer "verbesserten Stabilität" wird dabei insbesondere verstanden, dass die Druckfestigkeit des Polymerbetons oder des Vergussmörtels nach 7-tägigem Aushärten bei 20°C, anschliessender Lagerung in einer wässrigen 10 Vol.-%-igen Essigsäurelösung, einer neutralen wässrigen Lösung und/oder einer wässrigen 50 Gew.-%-igen NaOH-Lösung bei 20°C während 21 Tagen und darauffolgender Trocknung bis zur Gewichtskonstanz um weniger als 10%, insbesondere weniger als 5%, bevorzugt weniger als 1%, abnimmt. Die Druckfestigkeit wird dabei bevorzugt nach Norm ASTM D695 bestimmt.

Der Füllstoff in der Bindemittelzusammensetzung oder dem Mehrkomponentensystem ist dabei bevorzugt Schlacke, insbesondere eisenhaltige Schlacke.

Ein Anteil der Schlacke beträgt dabei insbesondere mindestens 60 Gew.-%, bevorzugt mindestens 65 Gew.-%, bezogen auf 100 Gew.-% Bindemittelzusammensetzung.

Noch weiter bevorzugt enthält die Bindemittelzusammensetzung Schlacke mit einer Partikelgrösse von mehr als 0.1 mm und zusätzliches Füllstoffmaterial, das keine Schlacke ist, mit einer Partikelgrösse von maximal 0.1 mm und keine weiteren Füllstoffmaterialien.

Die Bindemittelzusammensetzung oder das Mehrkomponentensystem sind daher besonders geeignet für Anwendungen, in welchen diese mit korrosiven Substanzen, insbesondere sauren und/oder basischen wässrigen Lösungen, in Kontakt kommen.

Ebenfalls offenbart ist die Verwendung der Bindemittelzusammensetzung oder des Mehrkomponentensystems für Anwendungen, in welchen die Bindemittelzusammensetzung oder das Mehrkomponentensystem nach dem Aushärten mit korrosiven Substanzen, insbesondere sauren und/oder basischen wässrigen Lösungen, in Kontakt kommt.

Bevorzugt handelt es sich dabei um Anwendungen, bei welchen die Bindemittelzusammensetzung oder das Mehrkomponentensystem nach dem Aushärten mit sauren als auch mit basischen wässrigen Lösungen in Kontakt kommt.

Die vorliegende Erfindung betrifft die Verwendung der ausgehärteten Bindemittelzusammensetzung oder eines ausgehärteten Mehrkomponentensystems zum Leiten von elektrischem Strom, insbesondere zum Ableiten von elektrostatischen Ladungen und/oder zum Ausgleich des elektrischen Potentials zwischen zwei Körpern.

Ebenfalls offenbart ist die Verwendung der erfindungsgemäss verwendeten Bindemittelzusammensetzung oder des erfindungsgemäss verwendeten Mehrkomponentensystems für die Herstellung von Materialien, mit bei 20°C verbesserter elektrischer Leitfähigkeit, dadurch gekennzeichnet, dass die Schlacke in der Bindemittelzusammensetzung eine eisenhaltige Schlacke mit mindestens 8 Gew.-% Eisen, gerechnet als FeO, bezogen auf das Gesamtgewicht der Schlacke, und/oder eine Schlacke mit einer Rohdichte von mindestens 3.1 kg/l, ist.

Überraschenderweise zeigt eine solche ausgehärtete Bindemittelzusammensetzung eine verbesserte elektrische Leitfähigkeit im Vergleich zu einer ausgehärteten Bindemittelzusammensetzung, die anstelle der eisenhaltigen Schlacke die gleiche Gewichtsmenge an Quarzsand mit gleicher Sieblinie enthält.

Das Material mit verbesserter elektrischer Leitfähigkeit weist bevorzugt einen um mindestens einen Faktor von 2, mehr bevorzugt mindestens 2.5, insbesondere mindestens 3.0, verringerten spezifischen elektrischen Durchgangswiderstand auf, im Vergleich zu einem ansonsten identischen Material, das aber anstatt der eisenhaltigen Schlacke Quarzsand von gleicher Partikelgrösse enthält. Der elektrische Durchgangswiderstand wird zwischen den zwei gegenüber liegenden 40 x 40 mm Flächen eines Prismas von 40 x 40 x 160 mm durch Anlegen einer Spannung von 100 mV und einer Frequenz von 1 kHz, bei 20°C, bestimmt, wobei die Messung nach 7 Tagen Lagerung bei 20°C durchgeführt wird.

Besonders vorteilhaft für das Untergiessen von Maschinen sind aushärtbare Bindemittelzusammensetzungen, die Schlacken mit einer Rohdichte von mindestens 2.9 kg/l, insbesondere mindestens 3.1 kg/l, bevorzugt mindestens 3.3 kg/l, im Speziellen mindestens 3.5 kg/l, umfassen. Dadurch kann ein speziell guter Verbund zwischen der ausgehärteten Bindemittelzusammensetzung und der darüber liegenden Maschine oder Turbine, welche untergossen wurde, sowie eine gute Druckfestigkeit des untergossenen Materials erhalten werden.

Die Verwendung des Mehrkomponentensystems erfolgt, indem die Komponenten vermischt werden. Es werden hierbei vorteilhaft zuerst die mindestens zwei Komponenten, umfassend die Bestandteile des organischen Bindemittels, gut gemischt und anschliessend die Komponente, umfassend die den Füllstoff, insbesondere Schlacke, falls eine solche separate Komponente vorhanden ist, gut eingemischt. Dabei können auch weitere Komponenten oder Zusatzmittel hinzugefügt werden. Nach der Vermischung aller Komponenten erfolgt die Aushärtung. Solche Verarbeitung ist dem Fachmann bekannt.

Überraschenderweise lässt sich die frisch gemischte aushärtbare Bindemittelzusammensetzung trotz des hohen Anteils an Füllstoff, insbesondere Schlacke, bei Umgebungstemperaturen sehr gut und homogen verarbeiten.

Es kann auch vorteilhaft sein, insbesondere für die Verwendung der Bindemittelzusammensetzung als Ausgleichsmörtel Estrich oder Bodenbeschichtung, wenn eine erfindungsgemässe Bindemittelzusammensetzung in folgenden Schritten gemischt und appliziert wird:
- Vermischen aller Komponenten der Bindemittelzusammensetzung, ausser den Füllstoffen mit einer Partikelgrösse von mehr als 0.06 mm, mit geeigneten Mischgeräten,
- Applizieren der Mischung als Ausgleichsmörtel, Estrich oder Bodenbeschichtung, und
- Einstreuen der Füllstoffe mit einer Partikelgrösse von mehr als 0.06 mm, wobei mindestens 20 Gew.-% dieser Füllstoffe eisenhaltige Schlacke sind, von Hand oder mit einer geeigneten Vorrichtung.

Ebenfalls offenbart ist eine ausgehärtete Bindemittelzusammensetzung, erhalten durch Aushärten der erfindungsgemässen aushärtbaren Bindemittelzusammensetzung oder durch Vermischen der Komponenten und Aushärten des erfindungsgemäss verwendeten Mehrkomponentensystems.

Die Aushärtung erfolgt bevorzugt bei Umgebungstemperaturen, insbesondere bei einer Temperatur im Bereich von 5 bis 40°C, bevorzugt 7 bis 35°C.

Die Bindemittelzusammensetzung ist ausgehärtet, wenn keine wesentlichen Reaktionen mehr zwischen Isocyanatgruppen und den Hydroxylgruppen des Polyols stattfinden. Die ausgehärtete Bindemittelzusammensetzung weist eine feste Konsistenz auf. Sie kann insbesondere in Form eines dreidimensionalen Gegenstandes oder Bauteils, oder als Beschichtung, Haftbrücke, Spachtelmasse, Bestandteil eines Laminats, Klebstoff, Füllung oder Dichtung vorliegen.

Bevorzugt sind der Füllstoff, insbesondere Schlacke, und das Füllstoffmaterial, falls vorhanden, gleichmässig oder im Wesentlichen gleichmäßig in der ausgehärteten Bindemittelzusammensetzung verteilt.

Es kann aber auch vorteilhaft sein, insbesondere für Unterfüllungen, beispielsweise von Maschinen und Turbinen, wenn die Konzentration an Füllstoff, insbesondere Schlacke, in der obersten Schicht der horizontalen Oberfläche der ausgehärteten Bindemittelzusammensetzung kleiner als in der restlichen ausgehärteten Bindemittelzusammensetzung, insbesondere unter 10 Gew.-%, ist. Dies kann den Verbund zwischen der Bindemittelzusammensetzung und dem zu unterfüllenden Objekt verbessern.

### Kurze Beschreibung der Figuren

- Fig. 1 zeigt:: eine schematische Darstellung von beispielhaften Querschnitten von Schlackepartikeln mit unregelmässiger Form;
- Fig. 2 zeigt:: die Druckfestigkeiten von erfindungsgemässen Probenkörpern mit Polyurethan-Matrix und unterschiedlichen Füllstoffen nach Lagerung in verschiedenen Medien (H₂O, AcOH oder NaOH);
- Fig. 3 zeigt:: die Druckfestigkeiten von weiteren erfindungsgemässen Probenkörpern mit Polyurethan-Matrix und unterschiedlichen Füllstoffen nach Lagerung in verschiedenen Medien;
- Fig. 4 zeigt:: die Druckfestigkeiten von Epoxy-basierten Probenkörpern mit unterschiedlichen Füllstoffen nach Lagerung in verschiedenen Medien.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"Bsp.": steht für "Beispiel"
"Ref.": steht für "Referenz-Beispiel"

### Verwendete Materialien

Setathane^{®} 1150 ist ein Polyol auf Basis eines Umsetzungsprodukts von Rizinusöl mit Ketonharzen (Allnex Resins Germany GmbH, Deutschland)
Desmophen^{®} T4011 ist ein Polyetherpolyol basierend auf 1,1,1-Trimethylolpropan (Covestro AG, Deutschland)
Sylosiv^{®} ist ein Zeolith (Grace, USA)
Desmodur^{®} VL ist ein aromatisches Polyisocyanat basierend auf 4,4'-Diphenylmethandiisocyanat (Covestro AG, Deutschland)
Desmodur^{®} CD-L ist ein aromatisches Polyisocyanat basierend 4,4'-Diphenylmethandiisocyanat (Covestro AG, Deutschland).
Neukapol^{®} 1119 ist ein Umsetzungsprodukt von epoxidierten Pflanzenölen (Rapsöl) mit einem Anteil an ungesättigten C-18-Fettsäuren von 91 Gew.-%, bezogen auf die Gesamtmenge an Fettsäuren, mit monofunktionellen C₁₋₈-Alkoholen; OH-Funktionalität 2.0, mittleres Molekulargewicht ca. 390 g/mol, OH-Zahl von 290 mg KOH/g, (Altropol Kunststoff GmbH, Deutschland)

Neukapol^{®} 1582 ist ein Umsetzungsprodukt von epoxidierten Fettsäureestern von Methanol mit Glycerin, wobei den epoxidierten Fettsäureestern als Fettsäurekomponente Fettsäuregemische von Rapsöl oder Sonnenblumenöl zugrunde liegen, in Abmischung mit N,N,N',N'-Tetrakis(2-hydroxypropyl)-ethylendiamin (Altropol Kunststoff GmbH, Deutschland).

Der Quarzsand und die Schlacken wurden vor der Verwendung getrocknet und durch Sieben in Kornfraktionen aufgeteilt. Die Kornfraktionen wurden anschliessend so gemischt, dass die Korngrössenverteilung der verwendeten Sande einer vorgegebenen Korngrössenverteilung (Sieblinie) entsprach.

EOS ist eine Elektroofenschlacke von Stahl Gerlafingen, Schweiz. Das eingesetzte Material hatte eine Rohdichte von etwa 3.3 kg/l und einen Gehalt an Eisen, gerechnet als FeO, von etwa 19 Gew.-%.

HOS ist eine Hochofenstückschlacke der Hüttenwerke Krupp Mannesmann, Deutschland, erhältlich von der Firma Hermann Rauen GmbH & Co., Deutschland. Das eingesetzte Material hatte eine Rohdichte von 2.9 kg/l und einen Gehalt an Eisen, gerechnet als FeO, von etwa 3 Gew.-%.

Raulit^{®} ist eine Hochofenschlacke der DK-Recycling und Roheisen GmbH, Deutschland, erhältlich unter dem Markennamen Raulit^{®}-Mineralbaustoffgemisch von der Firma Hermann Rauen GmbH & Co., Deutschland. Das eingesetzte Material hatte eine Rohdichte von etwa 2.9 kg/l und einen Gehalt an Eisen, gerechnet als FeO, von etwa 1 Gew.-%.

HS ist ein Hüttensand von voestalpine AG, Österreich. Das eingesetzte Material hatte eine Rohdichte von etwa 2.9 kg/l und einen Gehalt an Eisen, gerechnet als FeO, von unter 1 Gew.-%.

CS ist NAstra^{®} Eisensilikat Granulat, eine glasige Kupferschlacke, erhältlich von Sibelco, Deutschland, mit einer Rohdichte von etwa 3.7 kg/l und einem Gehalt an Eisen, gerechnet als FeO, von etwa 51 Gew.-%.

Sikadur^{®}-42 HE ist ein dreikomponentiger Vergussmörtel auf Epoxidharzbasis, erhältlich von Sika Schweiz AG.

Der Polycarboxylatether war ein Kammpolymer mit Carbonsäuregruppen und Polyethylenglykol-Seitenketten.

### Messmethoden

Die **Druckfestigkeit** und die **Biegezugfestigkeit** wurden an 40 x 40 x 160 mm Prüfkörpern mit Prüfmaschinen gemäss DIN EN 196-1 und EN 12190 bestimmt.

Zur Bestimmung des **spezifischen elektrischen Durchgangswiderstandes** wurden die gegenüber liegenden 40 x 40 mm Flächen der 40 x 40 x 160 mm-Prüfkörper mit elektrisch leitfähigem Gel bestrichen und an beide Flächen eine Stahlelektrode, die die ganze Fläche bedeckt, bündig angelegt. Der elektrische Durchgangswiderstand der Prüfkörper wurde durch Anlegen einer Spannung von 100 mV AC bei einer Frequenz von 1 kHz und 10 kHz an die beiden Elektroden bestimmt.

Die **thermische Leitfähigkeit** wurde gemäss ASTM D5470-06 mit dem ZFW TIM-Tester der Firma ZFW (Zentrum für Wärmemanagement) Stuttgart, Deutschland, an Prüfkörpern von 30 mm Durchmesser und 2 mm Höhe bestimmt.

### Polyurethan-Matrix

Für die Beispiele wurden als Polyurethan-Matrix die in Tabelle 1 und 2 beschriebenen Polyol-Komponenten (A-Komponente) und Polyisocyanat-Komponenten (B-Komponente) verwendet.

Für jede Zusammensetzung wurden die in den Tabellen 1 und 2 angegebenen Inhaltsstoffe in den angegebenen Mengen (in Gewichtsteilen) der Polyol-Komponente A mittels eines Vakuumdissolvers unter Feuchtigkeitsausschluss zu einer homogenen Paste verarbeitet und aufbewahrt. Ebenso wurden die in den Tabellen 1 und 2 angegebenen Inhaltsstoffe der Polyisocyanat-Komponente B aufbewahrt.

**Tabelle 1: Zusammensetzungen der Polyurethan-Matricen (alle Angaben ausser Verhältnisse in Gew.-%)**

| | **A** | **B** | **C** | **D** | **E** | **F** |
|---|---|---|---|---|---|---|
| **A-Komponente** | | | | | | |
| Setathane^{®} 1150 | 65.6 | 65.6 | 59.7 | 59.7 | 55.3 | 55.3 |
| Desmophen^{®} T4011 | 4.3 | 4.3 | 3.7 | 3.7 | 3.5 | 3.5 |
| Hydroxy-terminiertes Polybutadien-Polyol | 19.0 | 19.0 | 18.7 | 18.7 | 17.3 | 17.3 |
| Kettenverlängerer | | | | | | |
| - 1 ,4-Butandiol | 4.3 | 4.3 | - | - | - | - |
| - 1,5-Pentandiol | - | - | 11.2 | 11.2 | - | - |
| - Ethyl-1 ,3-hexandiol | - | - | - | - | 13.8 | 13.8 |
| Sylosiv^{®} | 6.9 | 6.9 | 6.6 | 6.6 | 10.0 | 10.0 |
| Prozesschemikalien¹⁾ | 0.1 | 0.1 | 0.1 | 0.1 | 0.1 | 0.1 |

| **B-Komponente** | | | | | | |
|---|---|---|---|---|---|---|
| Desmodur^{®} VL⁶⁾ | 100 | - | 100 | - | 100 | - |
| Desmodur^{®} CD-L⁷⁾ | - | 100 | - | 100 | - | 100 |
| **Mischverhältnis A:B** | 100: | 100: | 100: | 100: | 100: | 100: |
| [Gew.-%/Gew.-%] | 49.4 | 52.9 | 65.1 | 69.7 | 57.5 | 61.6 |
| NCO:OH | 1.11 | 1.11 | 1.11 | 1.11 | 1.10 | 1.10 |

| | | | | | | |
|---|---|---|---|---|---|---|
| ¹⁾ Entschäumer und Katalysator | | | | | | |

**Tabelle 2: Zusammensetzungen der Polyurethan-Matricen (alle Angaben ausser Verhältnisse in Gew.-%)**

| | **G** | **H** | **I** | **J** |
|---|---|---|---|---|
| **A-Komponente** | | | | |
| Neukapol^{®} 1119 | 43.9 | 43.9 | 58.0 | 58.0 |
| Neukapol^{®} 1582 | 22.0 | 22.0 | 29.0 | 29.0 |
| Hydroxy-terminiertes Polybutadien-Polyol | 22.0 | 22.0 | - | - |
| Sylosiv^{®} | 12.0 | 12.0 | 12.8 | 12.8 |
| Prozesschemikalien¹⁾ | 0.1 | 0.1 | 0.1 | 0.1 |

| **B-Komponente** | | | | |
|---|---|---|---|---|
| Desmodur^{®} VL | 100 | - | 100 | - |
| Desmodur^{®} CD-L | - | 100 | - | 100 |
| **Mischverhältnis A:B** | 100: | 100: | 100: | 100: |
| [Gew.-%/Gew.-%] | 64.6 | 69.2 | 81.9 | 87.8 |
| NCO:OH | 1.07 | 1.07 | 1.07 | 1.07 |

| | | | | |
|---|---|---|---|---|
| ¹⁾ Entschäumer und Katalysator | | | | |

### Feststoff-Komponente

Für die Herstellung der Feststoff-Komponente wurden die festen Bestandteile gemäss Tabelle 3 trocken gemischt und während des Mischens eine Polycarboxylatether-Lösung aufgesprüht.

**Tabelle 3: Zusammensetzung der Feststoff-Komponente**

| **Bestandteil** | **Anteil [Gew.-%]** |
|---|---|
| Mischung aus Kalkstein- und Schwerspatmehl, < 0.1 mm | 25.2 |
| Sand (Schlackesand oder Quarzsand)*, 0.12-3.2 mm | 74.3 |
| Polycarboxylatether-Lösung (20 Gew.-% Polycarboxylatether gelöst in 80 Gew.-% Benzylalkohol) | 0.5 |

| | |
|---|---|
| * Sand-Typ siehe Beispiele. | |

### Herstellung von aushärtbaren Vergussmörteln und Prüfkörpern

Die Polyol-Komponenten A und Polyisocyanat-Komponenten B aus den Tabellen 1 und 2 wurde mittels eines SpeedMixers^{®} (DAC 150 FV, Hauschild) während 30 Sekunden zu einer homogenen Paste verarbeitet (Mischverhältnisse siehe Tabellen 1 und 2). Anschliessend wurde eine Feststoff-Komponente gemäss Tabelle 3 zugegeben und gut eingemischt. Die Feststoff-Komponente wies dabei (sofern nicht anders angegeben) stets einen Anteil von 89.5 Gew.-% auf, während die vermischten Polyol-Komponenten A und Polyisocyanat-Komponenten B zusammen einen Anteil von 10.5 Gew.-% aufwiesen.

Zu Vergleichszwecken wurden zudem aushärtbare Zusammensetzungen und Prüfkörper basierend auf einer Epoxidharz-Matrix (im Folgenden als **SD** bezeichnet) wie folgt hergestellt: Sikadur^{®}-42 HE Komponente A (enthaltend das Epoxidharz) wurde mit der zugehörigen Komponente B (enthaltend den Härter) im Gewichtsverhältnis 3:1 gut gemischt und anschliessend eine selbst hergestellte Feststoff-Komponente gemäss Tabelle 3 zugegeben und gut eingemischt. Die Feststoff-Komponente wies dabei (sofern nicht anders angegeben) stets einen Anteil von 89.5 Gew.-% auf, während die vermischten Epoxidharz- und Härter Komponenten zusammen einen Anteil von 10.5 Gew.-% aufwiesen.

Zur Herstellung der Prüfkörper wurden die angemischten aushärtbaren Zusammensetzungen in Stahlformen gegossen und in der Schalung für 24 Stunden bei 20 °C gelagert. Danach wurden die Prüfkörper aus der Schalung genommen und bei 20 °C weiter gelagert. Nach 7 Tagen Lagerung wurden der spezifische elektrische Widerstand, die Festigkeit und die thermische Leitfähigkeit bestimmt.

### Festigkeit und elektrischer Durchgangswiderstand von Verqussmörteln

In den nachfolgenden Tabellen sind die Festigkeiten und elektrischen Durchgangswiderstände von verschiedenen Vergussmörteln angegeben.

Die Zeile "Bindemittel-Matrix" gibt die eingesetzte Polyurethan- oder Epoxidharz-Matrix an (siehe Tabellen 1 und 2), während die Zeilen "Sand" den in der Feststoff-Komponente verwendeten Sand- oder Schlacketyp angibt (siehe Tabelle 3).

**Tabelle 4: Resultate bei Verwendung von Quarz und Desmodur^{®} VL als Polyisocyanat-Komponente in der Polyurethan-Matrix**

| | **Ref. 1** | **B1** | **B2** | **B3** | **B4** | **B5** |
|---|---|---|---|---|---|---|
| Bindemittel-Matrix | **SD** | **I** | **G** | **E** | **C** | **A** |
| Sand | Quarzsand | Quarzsand | Quarzsand | Quarzsand | Quarzsand | Quarzsand |
| Druckfestigkeit [MPa] | 104 | 99 | 71 | 74 | 82 | 64 |
| Biegezugfestigkeit [MPa] | 26 | 26 | 22 | 24 | 25 | 24 |
| Spezifischer elektrischer Durchgangswiderstand [MΩ·cm] bei 1 kHz | 243.0 | 21.4 | 23.3 | 24.0 | 24.5 | 24.6 |
| Faktor¹⁾ 1 kHz | | 0.09 | 0.10 | 0.10 | 0.10 | 0.10 |
| Spezifischer elektrischer Durchgangswiderstand [MΩ·cm] bei 10 kHz | 24.9 | 2.2 | 2.4 | 2.5 | 2.5 | 2.5 |
| Faktor 10 kHz | | 0.09 | 0.10 | 0.10 | 0.10 | 0.10 |

| | | | | | | |
|---|---|---|---|---|---|---|
| ¹⁾ Faktor um den der spezifische elektrische Durchgangswiderstand eines Mörtels nach Beispiel B1 bis B5 im Vergleich zu dem spezifischen elektrischen Durchgangswiderstand des Referenzmörtels Ref. 1 reduziert ist, z.B. Widerstand B1/Widerstand Ref. 1. | | | | | | |

**Tabelle 5: Resultate bei Verwendung von Quarz und Desmodur^{®} CD-L als Polyisocyanat-Komponente in der Polyurethan-Matrix**

| | **Ref. 1** | **B6** | **B7** | **B8** | **B9** | **B10** |
|---|---|---|---|---|---|---|
| Bindemittel-Matrix | **SD** | **J** | **H** | **F** | **D** | **B** |
| Sand | Quarzsand | Quarzsand | Quarzsand | Quarzsand | Quarzsand | Quarzsand |
| Druckfestigkeit [MPa] | 104 | 102 | 75 | 75 | 82 | 73 |
| Biegezugfestigkeit [MPa] | 26 | 27 | 23 | 24 | 26 | 27 |
| Spezifischer elektrischer Durchgangswiderstand [MΩ·cm] bei 1 kHz | 243.0 | 26.0 | 23.3 | 24.5 | 25.9 | 23.6 |
| Faktor¹⁾ 1 kHz | | 0.11 | 0.10 | 0.10 | 0.11 | 0.11 |
| Spezifischer elektrischer Durchgangswiderstand [MΩ·cm] bei 10 kHz | 24.9 | 2.7 | 2.4 | 2.5 | 2.7 | 2.4 |
| Faktor 10 kHz | | 0.11 | 0.10 | 0.10 | 0.11 | 0.10 |

Aus den Daten in den Tabellen 4 und 5 ist ersichtlich, dass die elektrische Leitfähigkeit um eine Grössenordnung steigt bzw. der spezifische elektrische Widerstand um eine Grössenordnung sinkt, wenn man bei gleichem Füllstoff von einer Epoxy-Matrix auf eine Polyurethan-Matrix wechselt. Konkret liegt der spezifische elektrische Durchgangswiderstand bei Beispiel **Ref. 1** (basierend auf Epoxymatrix **SD** und Quarz als Füllstoff) bei 243.0 MΩ·cm bei 1 kHz bzw. bei 24.9 MΩ·cm bei 10 kHz, während die entsprechenden Durchgangswiderstände für die Beispiele **B1** - **B10** (alle basierend auf einer Polyurethan-Matrix und Quarz als Füllstoff) bei maximal 26.0 MΩ·cm bei 1 kHz bzw. bei 2.7 MΩ·cm bei 10 kHz liegen.

**Tabelle 6: Resultate bei Verwendung von Kupferschlacke (CS) und Desmodur^{®} VL als Polyisocyanat-Komponente in der Polyurethan-Matrix**

| | **Ref. 2** | **B11** | **B12** | **B13** | **B14** | **B15** |
|---|---|---|---|---|---|---|
| **Bindemittel-Matrix** | **SD** | **I** | **G** | **E** | **C** | **A** |
| Sand | CS | CS | CS | CS | CS | CS |
| Druckfestigkeit [MPa] | 116 | 93 | 66 | 65 | 82 | 51 |
| Biegezugfestigkeit [MPa] | 31 | 26 | 20 | 23 | 29 | 21 |
| Spezifischer elektrischer Durchgangswiderstand [MΩ·cm] bei 1 kHz | 24.9 | 15.5 | 15.3 | 16.7 | 15.5 | 15.8 |
| Faktor¹⁾ 1 kHz | | 0.62 | 0.61 | 0.67 | 0.62 | 0.63 |
| Spezifischer elektrischer Durchgangswiderstand [MΩ·cm] bei 10kHz | 3.3 | 1.6 | 1.6 | 1.8 | 1.6 | 1.7 |
| Faktor 10 kHz | | 0.48 | 0.48 | 0.55 | 0.48 | 0.52 |

**Tabelle 7: Resultate bei Verwendung von Kupferschlacke (CS) und Desmodur^{®} CD-L als Polyisocyanat-Komponente in der Polyurethan-Matrix**

| | **Ref. 2** | **B16** | **B17** | **B18** | **B19** | **B20** |
|---|---|---|---|---|---|---|
| Bindemittel-Matrix | **SD** | **J** | **H** | **F** | **D** | **B** |
| Sand | CS | CS | CS | CS | CS | CS |
| Druckfestigkeit [MPa] | 116 | 95 | 68 | 67 | 69 | 63 |
| Biegezugfestigkeit [MPa] | 31 | 27 | 20 | 20 | 25 | 25 |
| Spezifischer elektrischer Durchgangswiderstand [MΩ·cm] bei 1 kHz | 24.9 | 15.8 | 16.1 | 16.3 | 15.5 | 16.1 |
| Faktor¹⁾ 1 kHz | | 0.63 | 0.65 | 0.65 | 0.62 | 0.65 |
| Spezifischer elektrischer Durchgangswiderstand [MΩ·cm] bei 10kHz | 3.3 | 1.7 | 1.7 | 1.7 | 1.7 | 1.7 |
| Faktor 10 kHz | | 0.52 | 0.52 | 0.52 | 0.52 | 0.52 |

Auch bei Verwendung von eisenhaltiger Schlacke zeigen die Beispiele basierend auf einer Polyurethan-Matrix (Beispiele **B11** - **B20)** im Vergleich mit einer Epoxy-basierten Zusammensetzung (Beispiel **Ref. 2**) deutlich geringere spezifische elektrische Durchgangswiderstände bei 1 kHz als auch bei 10 kHz.

Ein Vergleich der Tabellen 4/5 mit den Tabellen 6/7 zeigt zudem, dass durch den Einsatz von eisenhaltiger Schlacke anstelle von Quarz die spezifischen elektrischen Durchgangswiderstände um einen Faktor 2 - 3 weiter verringert werden können.

### Thermische Leitfähigkeit

Weiter wurden die thermischen Leitfähigkeiten von verschiedenen Vergussmörteln gemessen. Dabei wurden Prüfkörper mit 30 mm Durchmesser und 2 mm Höhe durch Giessen in entsprechende Formen hergestellt und 7 Tage bei 20°C aushärten gelassen.

**Tabelle 8: Resultate thermische Leitfähigkeiten**

| | **Ref. 3** | **B21** | **B22** | **B23** | **B24** | **B25** | **B26** |
|---|---|---|---|---|---|---|---|
| Bindemittel-Matrix | **SD** | **I** | **I** | **I** | **I** | **I** | **I** |
| Sand | Quarzsand | | HOS | Raulit | HS | EOS | CS |
| Thermische Leitfähigkeit [W/m K]] | 2.8 | 2.9 | 1.1 | 1.1 | 0.9 | 1.0 | 0.9 |

Durch die Verwendung von Schlacke anstelle von Quarz kann die thermische Leitfähigkeit deutlich reduziert werden.

### Korrosionsbeständigkeit

Um die Korrosionsbeständigkeit der Bindemittelzusammensetzungen bzw. von daraus hergestellten Probenkörpern zu testen, wurden verschiedene Probenkörper wie vorstehend beschrieben hergestellt und 7 Tage bei 20°C aushärten gelassen. Daraufhin wurde die Druckfestigkeit nach ASTM D695 bestimmt.

Danach wurden die Probenkörper für 21 Tage (21d) jeweils in reinem Wasser (H₂O), in 10 Vol.-%-iger Essigsäure (AcOH) oder in 50 Gew.-%iger Natronlauge (NaOH) gelagert und anschliessend bis zur Gewichtskonstanz getrocknet. Daraufhin wurde erneut die Druckfestigkeit nach ASTM D695 bestimmt.

Fig. 2 zeigt die Druckfestigkeiten von Probenkörpern basierend auf der Polyurethan-Matrix **E** und einer Feststoff-Komponente wie sie vorstehen beschrieben ist, wobei als Sand wahlweise Quarz, HS, CS, Raulit, HOS oder EOS eingesetzt wurde.

Dabei ist zu erkennen, dass die Druckfestigkeiten unabhängig vom verwendeten Medium (H₂O, AcOH oder NaOH) nicht beeinträchtigt werden sondern im Gegenteil während der Lagerung zunehmen.

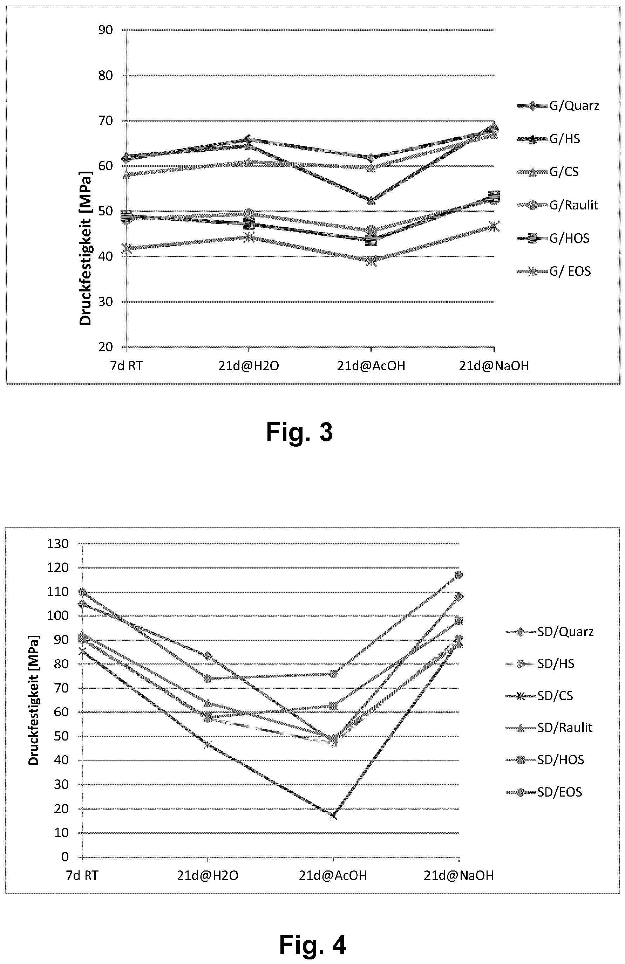

Fig. 3 zeigt die Druckfestigkeiten von Probenkörpern basierend auf der Polyurethan-Matrix **G** und einer Feststoff-Komponente wie sie vorstehend beschrieben ist, wobei als Sand wahlweise Quarz, HS, CS, Raulit, HOS oder EOS eingesetzt wurde.

Auch in diesem Fall nehmen die Druckfestigkeiten nach Lagerung in H₂O und NaOH zu, während in AcOH bei gewissen Feststoff-Komponenten eine geringe Abnahme feststellbar ist.

Fig. 4 zeigt zum Vergleich die Resultate von Probenkörper basierend auf der Epoxidharz-Matrix **SD** und einer Feststoff-Komponente wie sie vorstehend beschrieben ist, wobei als Sand wiederum wahlweise Quarz, HS, CS, Raulit, HOS oder EOS eingesetzt wurde.

Deutlich zu erkennen ist die starke Abnahme der Druckfestigkeit bei Lagerung in H₂O und AcOH. Einzig in NaOH bleibt die Druckfestigkeit erhalten, oder diese steigt leicht an während der Lagerung.

### Vergussmörtel mit unterschiedlichen Mengen an Polyurethan-Matrix

Tabelle 9 zeigt die Zusammensetzungen und Druckfestigkeiten von weiteren Vergussmörtel, bei welchen die Mengen der Bindemittel-Matrix und die Feststoffkomponenten modifiziert wurden.

**Tabelle 9: Vergussmörtel mit unterschiedlichen Mengen an Sand und Polyurethan-Matrix**

| | **B27** | **B28** | **B29** | **B30** | **B31** | **B32** |
|---|---|---|---|---|---|---|
| Bindemittel-Matrix/ Anteil [Gew.-%] | **E** | **E** | **E** | **E** | **E** | **E** |
| | 6.0 | 6.0 | 20.0 | 20.0 | 12.5 | 12.5 |
| Schlacke/ Anteil [Gew.-%] | CS | EOS | CS | EOS | CS | EOS |
| | 79.9 | 79.9 | 66.9 | 66.9 | 75.4 | 75.4 |
| Mischung aus Kalkstein- und Schwerspatmehl [Gew.-%] | 14.0 | 14.0 | 13.0 | 13.0 | 12.0 | 12.0 |
| Polycarboxylatether-Lösung [Gew.-%] | 0.1 | 0.1 | 0.1 | 0.1 | 0.1 | 0.1 |
| Druckfestigkeit [MPa] | 36.6 | 18.3 | 40.7 | 31.9 | 55.0 | 33.8 |

Die Resultate in Tabelle 9 zeigen, dass ein Anteil der Bindemittel-Matrix im Bereich von mehr als 6.0 Gew.-% vorteilhaft ist in Bezug auf die Druckfestigkeit. Bei Kupferschlacke (CS) und Elektroofenschlacke (EOS) zeigt der Versuch mit 12.5 Gew.-% Bindemittel-Matrix die höchste Druckfestigkeit.

## Patentansprüche

1. Verwendung einer ausgehärteten Bindemittelzusammensetzung zum Leiten von elektrischem Strom, insbesondere zum Ableiten von elektrostatischen Ladungen und/oder zum Ausgleich des elektrischen Potentials zwischen zwei Körpern, wobei die ausgehärtete Bindemittelzusammensetzung erhalten ist durch Aushärten einer aushärtbaren Bindemittelzusammensetzung umfassend: a) mindestens ein organisches Bindemittel, umfassend ein Polyisocyanat und ein Polyol, und b) mindestens 50 Gew.-% eines Füllstoffs in Form von Schlacke oder einer Mischung aus Schlacke und Quarz, bezogen auf 100 Gew.-% Bindemittelzusammensetzung.

2. Verwendung nach Anspruch 1, wobei der Füllstoff eine Partikelgrösse von wenigstens 0.1 mm, insbesondere 0.1 mm bis 3.5 mm, aufweist, wobei weiter bevorzugt wenigstens drei unterschiedliche Kornfraktionen vorliegen, wobei eine erste Kornfraktion eine Korngrösse im Bereich von 0.125 - 0.25 mm, eine zweite Kornfraktion eine Korngrösse im Bereich von 0.5 - 0.8 mm und eine dritte Kornfraktion eine Korngrösse im Bereich von 2.0 - 3.15 mm, aufweist.

3. Verwendung nach wenigstens einem der Ansprüche 1 - 2, wobei die Schlacke ausgewählt ist aus der Gruppe bestehend aus Hochofenschlacken, insbesondere Hochofenstückschlacken und Hüttensande, Stahlschlacken, Metallhüttenschlacken, insbesondere Kupferschlacken, und Schlacken aus der Abfallverbrennung, wobei Hochofenschlacken, Stahlschlacken und Metallhüttenschlacken bevorzugt sind.

4. Verwendung nach wenigstens einem der Ansprüche 1 - 3, wobei als Füllstoff Schlacke mit einem Anteil von mindestens 60 Gew-%, bevorzugt mindestens 65 Gew.-%, bezogen auf 100 Gew.-% Bindemittelzusammensetzung, vorliegt, wobei die Schlacke eine eisenhaltige Schlacke mit mindestens 8 Gew.-%, insbesondere mindestens 10 Gew.-%, bevorzugt mindestens 15 Gew.-%, 20 Gew.-%, oder 25 Gew.-%, Eisen, gerechnet als FeO, ist und die Schlacke eine Rohdichte von mindestens 2.9 kg/l, bevorzugt mindestens 3.1 kg/l, insbesondere mindestens 3.3 kg/l, im Speziellen mindestens 3.5 kg/l, aufweist.

5. Verwendung nach wenigstens einem der Ansprüche 1 - 4, **dadurch gekennzeichnet, dass** ein zusätzliches Füllstoffmaterial vorliegt, welches vom Füllstoff verschieden ist, wobei das zusätzliche Füllstoffmaterial bevorzugt eine Partikelgrösse von maximal 0.1 mm aufweist.

6. Verwendung nach wenigstens einem der Ansprüche 1 - 5, **dadurch gekennzeichnet, dass** die Zusammensetzung weniger als 10 Gewichts.-%, bevorzugt weniger als 5 Gew.-%, besonders bevorzugt weniger als 1 Gew.-%, Quarz enthält.

7. Verwendung nach wenigstens einem der Ansprüche 1 - 6, wobei das Polyisocyanat und das Polyol zusammen einen Anteil von mindestens 5 Gew-%, bevorzugt mindestens 10 Gew.-%, im Besonderen 8 - 22 Gew.-%, im Speziellen 10 - 15 Gew.-%, aufweisen, bezogen auf 100 Gew.-% Bindemittelzusammensetzung.

8. Verwendung nach wenigstens einem der Ansprüche 1 - 7, wobei das organische Bindemittel mindestens eine Mischung von Polyolen mit unterschiedlicher OH-Funktionalität beinhaltet.

9. Verwendung nach wenigstens einem der Ansprüche 1 - 8, wobei die Bindemittelzusammensetzung enthält:
- 3 bis 40 Gew.-% Polyisocyanate,
- 3 bis 40 Gew.-% Polyole,
- 50 bis 94 Gew.-% Füllstoff in Form von Schlacke, wobei bevorzugt mindestens 20 Gew.-% des Füllstoffs eisenhaltige Schlacke ist,
- optional 10 bis 40 Gew.-%, insbesondere 15 bis 35 Gew.-%, im Speziellen 20 bis 30 Gew.-%, zusätzliches Füllstoffmaterial, insbesondere Kalkstein und/oder Schwerspat, und
- 0 bis 15 Gew.-% weitere Additive,
bezogen auf 100 Gew.-% Bindemittelzusammensetzung.

10. Verwendung nach wenigstens einem der Ansprüche 1 - 8, wobei die aushärtbare Bindemittelzusammensetzung in Form eines Mehrkomponentensystem vorliegt, bevorzugt als System mit zwei oder drei Komponenten.

## Claims

1. Use of a cured binder composition for conducting electric current, in particular for conducting electrostatic charges and/or for balancing the electric potential between two bodies, wherein the cured binder composition is obtained by curing a curable binder composition comprising: a) at least one organic binder comprising a polyisocyanate and a polyol, and b) at least 50% by weight of a filler in the form of slag or a mixture of quartz and slag, based on 100% by weight of the binder composition.

2. Use according to Claim 1, wherein the filler has a particle size of at least 0.1 mm, in particular 0.1 mm to 3.5 mm, and wherein at least three different grain fractions are further preferably present, a first grain fraction having a grain size within a range of 0.125-0.25 mm, a second grain fraction having a grain size within a range of 0.5-0.8 mm and a third grain fraction having a grain size within a range of 2.0-3.15 mm.

3. Use according to at least one of Claims 1-2, wherein the slag is selected from the group consisting of blast furnace slags, in particular blast furnace lump slags and foundry slags, steel slags, metallurgical slags, in particular copper slags, and slags from waste incineration, preference being given to blast furnace slags, steel slags and metallurgical slags.

4. Use according to at least one of Claims 1-3, wherein slag having a proportion of at least 60% by weight, preferably at least 65% by weight, based on 100% by weight of the binder composition, is present as filler, the slag being an iron-containing slag comprising at least 8% by weight, in particular at least 10% by weight, preferably at least 15% by weight, 20% by weight or 25% by weight, of iron, calculated as FeO, and the slag having a bulk density of at least 2.9 kg/l, preferably at least 3.1 kg/l, in particular at least 3.3 kg/l, especially at least 3.5 kg/l.

5. Use according to at least one of Claims 1-4, **characterized in that** an additional filler material different from the filler is present, the additional filler material preferably having a particle size of not more than 0.1 mm.

6. Use according to at least one of Claims 1-5, **characterized in that** the composition comprises less than 10% by weight, preferably less than 5% by weight, more preferably less than 1% by weight, of quartz.

7. Use according to at least one of Claims 1-6, wherein the polyisocyanate and the polyol together have a proportion, based on 100% by weight of the binder composition, of at least 5% by weight, preferably at least 10% by weight, in particular 8% to 22% by weight, especially 10% to 15% by weight.

8. Use according to at least one of Claims 1-7, wherein the organic binder includes at least one mixture of polyols having different OH functionality.

9. Use according to at least one of Claims 1-8, wherein the binder composition comprises:
- 3% to 40% by weight of polyisocyanates,
- 3% to 40% by weight of polyols,
- 50% to 94% by weight of filler in the form of slag, preferably at least 20% by weight of the filler being iron-containing slag,
- optionally 10% to 40% by weight, in particular 15% to 35% by weight, especially 20% to 30% by weight, of additional filler material, in particular limestone and/or baryte, and
- 0% to 15% by weight of further additives,
based on 100% by weight of the binder composition.

10. Use according to at least one of Claims 1-8, wherein the curable binder composition is present in the form of a multicomponent system, preferably as a system comprising two or three components.

## Revendications

1. Utilisation d'une composition de liants durcie destinée à conduire du courant électrique, en particulier pour détourner des charges électrostatiques et/ou pour compenser le potentiel électrique entre deux corps, la composition de liants durcie étant obtenue par durcissement d'une composition de liants durcissable comprenant a) au moins un liant organique, comprenant un polyisocyanate et un polyol, et b) au moins 50 % en poids d'une charge sous forme de laitier ou d'un mélange de laitier et de quartz, pour 100 % en poids de la composition de liants.

2. Utilisation selon la revendication 1, la charge ayant une granulométrie d'au moins 0,1 mm, en particulier de 0,1 mm à 3,5 mm, et présentant d'une manière plus préférée au moins trois fractions granulométriques différentes, une première fraction granulométrique ayant une granulométrie dans la plage de 0,125 à 0,25 mm, une deuxième fraction granulométrique ayant une granulométrie dans la plage de 0,5 à 0,8 mm et une troisième fraction granulométrique ayant une granulométrie dans la plage de 2,0 à 3,15 mm.

3. Utilisation selon au moins l'une des revendications 1 - 2, le laitier étant choisi dans le groupe consistant en les laitiers de haut fourneau, en particulier les laitiers concassés de haut fourneau et les sables de laitier, les laitiers d'acier, les laitiers d'usines métallurgiques, en particulier les laitiers de cuivre, et les scories provenant de l'incinération des ordures, les laitiers de haut fourneau, les laitiers d'acier et les laitiers d'usines métallurgiques étant préférés.

4. Utilisation selon au moins l'une des revendications 1 à 3, la charge étant un laitier correspondant à une proportion d'au moins 60 % en poids, de préférence d'au moins 65 % en poids, pour 100 % en poids de la composition de liants, le laitier étant un laitier contenant du fer, ayant au moins 8 % en poids, en particulier au moins 10 % en poids, de préférence au moins 15 % en poids, 20 % en poids ou 25 % en poids de fer, exprimé en FeO, et le laitier ayant une masse volumique apparente d'au moins 2,9 kg/l, de préférence d'au moins 3,1 kg/l, en particulier d'au moins 3,3 kg/l, tout spécialement d'au moins 3,5 kg/l.

5. Utilisation selon au moins l'une des revendications 1 à 4, **caractérisée par** la présence d'au moins une matière de charge supplémentaire, qui est différente de la charge, la matière de charge supplémentaire présentant de préférence une granulométrie maximale de 0,1 mm.

6. Utilisation selon au moins l'une des revendications 1 à 5, **caractérisée en ce que** la composition contient moins de 10 % en poids, de préférence moins de 5 % en poids, d'une manière particulièrement préférée moins de 1 % en poids de quartz.

7. Utilisation selon au moins l'une des revendications 1 à 6, le polyisocyanate et le polyol représentant conjointement une proportion d'au moins 5 % en poids, de préférence d'au moins 10 % en poids, en particulier de 8 à 22 % en poids, tout spécialement de 10 à 15 % en poids pour 100 % en poids de la composition de liants.

8. Utilisation selon au moins l'une des revendications 1 à 7, le liant organique contenant au moins un mélange de polyols ayant des fonctionnalités OH différentes.

9. Utilisation selon au moins l'une des revendications 1 à 8, la composition de liants contenant :
- 3 à 40 % en poids de polyisocyanate,
- 3 à 40 % en poids de polyol,
- 50 à 94 % en poids d'une charge sous forme d'un laitier, de préférence au moins 20 % en poids de la charge étant un laitier contenant du fer,
- éventuellement 10 à 40 % en poids, en particulier 15 à 35 % en poids, tout spécialement 20 à 30 % en poids d'une matière de charge supplémentaire, en particulier du calcaire et/ou de la baryte sulfatée, et
- 0 à 15 % en poids d'autres additifs,
pour 100 % en poids de la composition de liants.

10. Utilisation selon au moins l'une des revendications 1 à 8, la composition de liants durcissable se présentant sous forme d'un système multi-composant, de préférence sous forme d'un système à deux ou trois composants.
